# EUROPEAN PATENT APPLICATION

(11) **EP 3 168 795 A1**
(43) Date of publication of application: **17.05.2017**
(21) Application number: 16198225.1
(22) Date of filing: 10.11.2016
(51) Int. Cl.: G06Q 10/00, G06Q 30/02

(54) **METHOD AND APPARATUS FOR EVALUATING RELEVANCE OF KEYWORD TO ASSET PRICE**

(30) Priority: 16.11.2015 KR 20150160168
(71) Applicant: Uberple Co., Ltd., Seoul (KR)
(72) Inventor: Jeong, Jaepil, Incheon (KR); Kim, Jae Yun, Incheon (KR)
(74) Representative: Glawe, Delfs, Moll

(57) **Abstract**

Methods and apparatus for evaluating relevance of keyword to asset price are provided, one of methods comprises, collecting text content posted on a first date through the Internet, generating one or more daily keywords of the first date by extracting a keyword from each piece of the text content, generating daily appearance frequency information of each daily keyword of the first date, and determining an asset corresponding to each daily keyword by comparing the generated daily appearance frequency information of each daily keyword with daily price information of each pre-registered asset.

## Description

This application claims the benefit of Korean Patent Application No. 10-2015-0160168, filed on November 16th, 2015, in the Korean Intellectual Property Office, the disclosure of which is incorporated herein by reference in its entirety.

### BACKGROUND

### 1. Field

The present inventive concept relates to a method and apparatus for evaluating the relevance of a keyword to an asset price, and more particularly, to a method and apparatus for evaluating a daily keyword generated automatically using text content to an asset price.

### 2. Description of the Related Art

With the development of information technology, various issues of the society are being widely shared over the Internet. Economic issues such as corporate performance announcements and development plans in a specific area affect stock prices of individual companies and real estate price fluctuations. In addition to the economic issues, political and social issues such as international relations and incidents have a wide-reaching effect on the economy. For example, a particular social event can reduce consumer confidence, thereby affecting the economy.

As such various issues of the society are reproduced on an enlarged scale in the Internet space, they are becoming more influential. Therefore, it is required to analyze the influence of an issue on asset value fluctuations when an asset investment or sale plan of an individual is established.

However, the service of predicting an issue that will affect the price of an asset being held or to be invested in is not yet available. In addition, the service of analyzing the specific influence of each issue on an asset and providing investment guidance on the asset to an individual is not yet available.

### SUMMARY

Aspects of the inventive concept provide a method and apparatus for analyzing the influence of various issues on an asset price.

Aspects of the inventive concept also provide a method and apparatus for extracting keywords indicating various issues from text content which contains the various issues.

Aspects of the inventive concept also provide a method and apparatus for automatically determining the influence of a keyword on an asset.

Aspects of the inventive concept also provide a method and apparatus for providing investment guidance to a user by analyzing the influence of a keyword on the price of an asset.

Specifically, aspects of the inventive concept also provide a method and apparatus for predicting the influence of a keyword on an asset based on pre-collected relevance information of the keyword to the asset.

Aspects of the inventive concept also provide a method and apparatus for providing a keyword related to an asset being held or targeted by a user.

Specifically, aspects of the inventive concept also provide a method and apparatus for providing a keyword related to an asset being held or targeted by a user to offer the user an opportunity to cope with a situation where the keyword becomes an issue.

However, aspects of the inventive concept are not restricted to the one set forth herein. The above and other aspects of the inventive concept will become more apparent to one of ordinary skill in the art to which the inventive concept pertains by referencing the detailed description of the inventive concept given below.

According to one exemplary embodiment of the present invention, a method of automatically generating a daily keyword using text content by a service server is provided, the method comprises collecting text content posted on a first date through the Internet, extracting a keyword from each piece of the text content and forming a keyword pool of the extracted keywords of the first date, and generating one or more daily keywords of the first date using the result of comparing the keyword pool of the first date and a keyword pool of a second date.

According to the exemplary embodiment, wherein the generating of the daily keywords of the first date comprises determining a first time window based on the first date, comparing the keyword pool of the first date with a keyword pool of at least one date included in the first time window, and generating one or more daily keywords of the first date using the comparison result.

According to the exemplary embodiment, wherein the generating of the daily keywords of the first date comprises determining a first time window based on the first date, determining whether a new keyword posted more than a predetermined number of times is included in the keywords of the keyword pool of the first date and generating one or more daily keywords including the new keyword when the new keyword is included in the keywords of the keyword pool of the first date, wherein the new keyword is not included in a daily keyword pool of at least one other date within the first time window.

According to the exemplary embodiment wherein the generating of the daily keywords of the first date comprises determining a first time window and a second time window based on the first date, determining whether to remove each of the keywords included in the keyword pool of the first date based on a ratio of the number of times that each of the keywords was posted within the second time window and the number of times that each of the keywords was posted within the first time window and generating one or more daily keywords of the first date based on the determination result, wherein the second time window comprises more dates than the first time window.

According to the exemplary embodiment, wherein the generating of the daily keywords of the first date comprises identifying sources of pieces of the collected text content which comprise the daily keywords of the first date and prioritizing the daily keywords of the first date based on the identified sources.

According to the exemplary embodiment, wherein when one of the daily keywords of the first date has different sources, the generating of the daily keywords of the first date comprises determining the keyword to be different keywords according to attributes of each of the different sources.

According to the exemplary embodiment, wherein the generating of the daily keywords of the first date comprises identifying sources of pieces of the collected text content which comprise the daily keywords of the first date and matching the daily keywords of the first date with assets based on the identified sources.

According to another exemplary embodiment of the present invention, a method of evaluating the relevance of a keyword to an asset price by a service server is provided, the method comprises collecting text content posted on a first date through the Internet, generating one or more daily keywords of the first date by extracting a keyword from each piece of the text content, generating daily appearance frequency information of each daily keyword of the first date, and determining an asset corresponding to each daily keyword by comparing the generated daily appearance frequency information of each daily keyword with daily price information of each pre-registered asset.

According to yet another exemplary embodiment, wherein the determining of the asset corresponding to each daily keyword comprises identifying an asset whose daily price change during a second period is equal to or greater than a threshold value in response to the daily appearance frequency of each daily keyword during a first period and determining the identified asset to be an asset corresponding to each daily keyword.

According to yet another exemplary embodiment, wherein the price change comprises an absolute value of the price change.

According to yet another exemplary embodiment, wherein the determining of the asset corresponding to each daily keyword comprises determining whether the same keyword as a daily keyword of the first date is included in one or more daily keywords of a second date, monitoring daily price information of an asset determined to correspond to the same keyword when the same keyword is included in the daily keywords of the second date and determining relevance information of the same keyword to the determined asset based on the monitoring result, wherein the daily price information of the determined asset is daily price information of the determined asset during a preset period of time based on the second date.

According to yet another exemplary embodiment, wherein the determining of the relevance information comprises updating the relevance information of the same keyword to the determined asset when it is monitored that the price change of the determined asset during the preset period of time is equal to or greater than a threshold value.

According to yet another exemplary embodiment, wherein the determining of the asset corresponding to each daily keyword comprises, when a plurality of daily keywords of the first date which correspond to the same asset exist, determining whether any one of the plurality of the daily keywords is included in daily keywords of the second date, monitoring daily price information of the asset determined to correspond to the any one of the keywords when the any one of the daily keywords is included in the daily keywords of the second date, and determining relevance information of the any one of the daily keywords to the determined asset based on the monitoring result, wherein the daily price information of the determined asset is daily price information of the determined asset during a period of time within a preset range from the second date.

According to yet another exemplary embodiment, wherein the determined of the asset corresponding to each daily keyword comprises when a plurality of daily keywords of the first date which correspond to the same asset exist, determining whether the plurality of daily keywords are included in daily keywords of the second date, monitoring daily price information of the asset determined to correspond to the plurality of daily keywords when the daily keywords are included in the daily keywords of the second date, and determining relevance information of the plurality of daily keywords to the determined asset based on the monitoring result, wherein the daily price information of the determined asset is daily price information of the determined asset during a period of time within a preset range from the second date.

According to other exemplary embodiment of the present invention, an apparatus for evaluating the relevance of a keyword to an asset price is provided, the apparatus comprises one or more processors, a memory which loads a computer program executed by the processors, a storage unit which stores daily price information of each pre-registered asset and daily keywords generated by the execution of the computer program, and a network interface which transmits the daily keywords,wherein the computer program comprises, an operation of collecting text content posted on a first date through the Internet, an operation of generating one or more daily keywords of the first date by extracting a keyword from each piece of the text content, an operation of generating daily appearance frequency information of each daily keyword of the first date, and an operation of determining an asset corresponding to each daily keyword by comparing the generated daily appearance frequency information of each daily keyword with the daily price information of each pre-registered asset.

According to the other exemplary embodiment, wherein the operation of determining the asset corresponding to each daily keyword comprises an operation of identifying an asset whose daily price change during a second period is equal to or greater than a threshold value in response to the daily appearance frequency of each daily keyword during a first period and an operation of determining the identified asset to be an asset corresponding to each daily keyword.

According to the other exemplary embodiment, wherein the computer program further comprises an operation of generating one or more daily keywords of a second date, and an operation of determining whether the same keyword as any one of the daily keywords of the first date is included in the daily keywords of the second date.

According to the other exemplary embodiment, wherein the operation of determining the asset corresponding to each daily keyword comprises an operation of measuring a time gap between the first period and the second period and an operation of storing the result of measuring the time gap as relevance information of each daily keyword to the corresponding asset, wherein the computer program further comprises an operation of transmitting investment guidance on the corresponding asset to a user terminal based on the relevance information when it is determined that the same keyword as the any one of the daily keywords of the first date is included in the daily keywords of the second date.

According to the other exemplary embodiment, wherein the operation of determining the asset corresponding to each daily keyword comprises an operation of determining which of the first period and the second period precedes the other period and an operation of storing the determination result as relevance information of each daily keyword to the corresponding asset, wherein the computer program further comprises an operation of transmitting investment guidance on the corresponding asset to a user terminal based on the relevance information when it is determined that the same keyword as the any one of the daily keywords of the first date is included in the daily keywords of the second date.

According to the other exemplary embodiment, wherein the operation of determining the asset corresponding to each daily keyword comprises an operation of storing the second period as relevance information of each daily keyword to the corresponding asset, wherein the computer program further comprises an operation of transmitting investment guidance on the corresponding asset to a user terminal based on the relevance information when it is determined that the same keyword as the any one of the daily keywords of the first date is included in the daily keywords of the second date.

According to the other exemplary embodiment, wherein the operation of determining the asset corresponding to each daily keyword comprises an operation of storing a daily price change which is equal to or greater than the threshold value as relevance information of each daily keyword to the corresponding asset, wherein the computer program further comprises an operation of transmitting investment guidance on the corresponding asset to a user terminal based on the relevance information when it is determined that the same keyword as the any one of the daily keywords of the first date is included in the daily keywords of the second date.

According to the other exemplary embodiment, wherein the computer program further comprises an operation of, when receiving information about a selected daily keyword from a user terminal, transmitting information about an asset corresponding to the selected daily keyword to the user terminal.

According to the other exemplary embodiment, wherein the computer program further comprises an operation of, when receiving information about an asset selected by a user from a user terminal, extracting a keyword corresponding to the selected asset, and an operation of transmitting the keyword corresponding to the selected asset to the user terminal.

According to the other exemplary embodiment, wherein the storage unit stores an asset selected by a user in advance among the pre-registered assets, and the computer program further comprises an operation of generating one or more daily keywords of a second date, an operation of determining whether the same keyword as any one of the daily keywords of the first date is included in the daily keywords of the second date, and an operation of transmitting a keyword corresponding to the asset selected by the user to a user terminal when it is determined that the same keyword as the any one of the daily keywords of the first date is included in the daily keywords of the second date.

According to other exemplary embodiment of the present invention, another apparatus for evaluating the relevance of a keyword to an asset price is provided, the another apparatus comprises one or more processors, a memory which loads a computer program executed by the processors, and a storage unit which stores daily price information of each pre-registered asset and daily keywords generated by the execution of the computer program, wherein the computer program comprises, an operation of identifying an asset whose daily price change during a first period is equal to or greater than a threshold value among the pre-registered assets, an operation of collecting text content posted on a first date through the Internet, an operation of generating one or more daily keywords of the first date by extracting a keyword from each piece of the text content, an operation of detecting daily appearance frequency of each daily keyword of the first date during a second period, an operation of extracting a keyword whose daily appearance frequency during the second period corresponds to the daily price change of the identified asset during the first period from the daily keywords of the first date, and an operation of determining the extracted keyword to be a keyword corresponding to the identified asset.

According to the other exemplary embodiment, the apparatus further comprises a network interface which transmits the determined keyword, wherein the computer program comprises an operation of detecting a price change of the identified asset which is equal to or greater than the threshold value during a third period, an operation of identifying an asset corresponding to the determined keyword among the pre-registered assets, and an operation of transmitting investment guidance on the identified asset to a user terminal.

According to other exemplary embodiment of the present invention, a method of displaying asset information matched with text content by a user terminal is provided, the method comprises displaying text content in a first area of a display unit of the user terminal, extracting one or more keywords from the text content, extracting an asset matched with each of the extracted keywords from pre-registered assets, and displaying price information of an asset which has been extracted a preset number of times or more in a second area different from the first area when the asset which has been extracted the preset number of times or more is included in the extracted assets.

According to the other exemplary embodiment, wherein the asset matched with each of the extracted keywords comprises an asset whose daily price change during a second period is equal to or greater than a threshold value in response to daily appearance frequency of each of the extracted keywords during a first period, and the price information comprises prediction information about the price of the asset which has been extracted the preset number of times or more, wherein the prediction information about the price of the asset which has been extracted the preset number of times or more is determined based on relevance information of each of the extracted keywords to the asset which has been extracted the preset number of times or more.

According to the other exemplary embodiment, wherein the extracting of the asset matched with each of the extracted keywords comprises, when the asset which has been extracted the preset number of times or more is included in the extracted assets, matching the asset which has been extracted the preset number of times or more with the text content.

According to other exemplary embodiment of the present invention, another method of displaying asset information matched with text content by a user terminal is provided, the another method comprises displaying information about an asset in a first area of a display unit of a user terminal, displaying a list of pieces of text content matched with the asset in a second area different from the first area, and when any one of the pieces of the text content is selected, displaying the selected piece of the text content, wherein each piece of the text content matched with the asset comprises at least one keyword matched with the asset.

### BRIEF DESCRIPTION OF THE DRAWINGS

These and/or other aspects will become apparent and more readily appreciated from the following description of the embodiments, taken in conjunction with the accompanying drawings in which:
FIG. 1 is a conceptual diagram illustrating the relevance of a keyword to an asset price, which is referred to in some embodiments;
FIG. 2 illustrates a system for evaluating the relevance of a keyword to an asset price according to an embodiment;
FIG. 3 is a block diagram of a service server according to an embodiment;
FIG. 4 is a flowchart illustrating a method of automatically generating a keyword using text content according to an embodiment;
FIG. 5 illustrates keyword pools which are referred to in some embodiments;
FIG. 6 illustrates a daily keyword which is referred to in some embodiments;
FIG. 7 illustrates a first time window for determining a daily keyword, which is referred to in some embodiments;
FIG. 8 illustrates a second time window for determining a daily keyword, which is referred to in some embodiments;
FIGS. 9 and 10 illustrate a keyword refinement process which is referred to in some embodiments;
FIG. 11 illustrates priority rankings of daily keywords according to source, which are referred to in some embodiments;
FIG. 12 illustrates assets matched with keywords, which are referred to in some embodiments;
FIG. 13 is a flowchart illustrating a method of evaluating the relevance of a keyword to an asset price according to an embodiment;
FIG. 14 illustrates an example process of determining an asset corresponding to a keyword, which is referred to in some embodiments.
FIG. 15 illustrates another example process of determining an asset corresponding to a keyword, which is referred to in some embodiments;
FIG. 16 illustrates the influence of keywords on an asset, which is referred to in some embodiments;
FIG. 17 illustrates the difference between a time when a keyword is generated and a time when the price of an asset is changed, which is referred to in some embodiments;
FIG. 18 illustrates a period of time during which a keyword affects an asset, which is referred to in some embodiments;
FIG. 19 illustrates an example process of identifying a keyword that affects an asset among a plurality of keywords, which is referred to in some embodiments;
FIG. 20 illustrates an asset affected by a plurality of keywords, which is referred to in some embodiments;
FIG. 21 illustrates relevance information of keywords to assets, which is referred to in some embodiments;
FIG. 22 illustrates relevance indices of keywords to assets, which are referred to in some embodiments;
FIG. 23 illustrates an example graphic user interface (GUI) for providing daily keywords, according to an embodiment;
FIG. 24 illustrates an investment guidance interface based on a time when a keyword affects the price of an asset, which is referred to in some embodiments;
FIG. 25 illustrates an investment guidance interface based on the degree of influence of a keyword on the price of an asset, which is referred to in some embodiments;
FIG. 26 illustrates a daily keyword corresponding to an asset according to an embodiment;
FIG. 27 is a flowchart illustrating a method of extracting a daily keyword corresponding to a price change of an asset according to an embodiment;
FIG. 28 illustrates a service of, when the price of an asset is changed, recommending another asset according to an embodiment; and
FIG. 29 is a conceptual diagram illustrating the matching relationship between text content, keywords and assets according to an embodiment.

### DETAILED DESCRIPTION

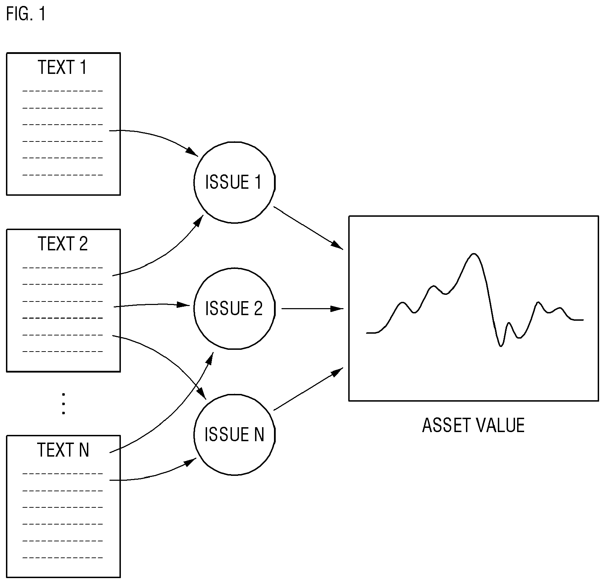

FIG. 1 is a conceptual diagram illustrating the relevance of a keyword to an asset price, which is referred to in some embodiments. Texts are distributed through various web pages such as blogs, Internet news, messengers and social networking service (SNS). The content of each text includes various issues, and these issues can affect the values of various types of assets.

Referring to FIG. 1, if text 1 is a text posted on a stock information blog, the content of text 1 may include stock information. If issue 1 included in the content of text 1 is a stock forecast for company A, it can affect the stock value of the company. In addition, text 2 may be a text posted on a web page of Internet news, and the content of text 2 may include a forecast for the domestic real estate market as an issue. In this case, if issue 2 is information about real estate prices of area B, it can affect the real estate prices.

An issue can be distributed over the Internet in the form of keywords indicating the issue. In the above example, issue 1 can be expressed by keywords such as "A," "company A," "stock price of company A," etc. In addition, issue 2 can be expressed by keywords such as 'B," "real estate B," "price of B," etc. The configuration and operation of a system for evaluating the relevance of a keyword to an asset price according to an embodiment will now be described with reference to the above-described text content and keywords.

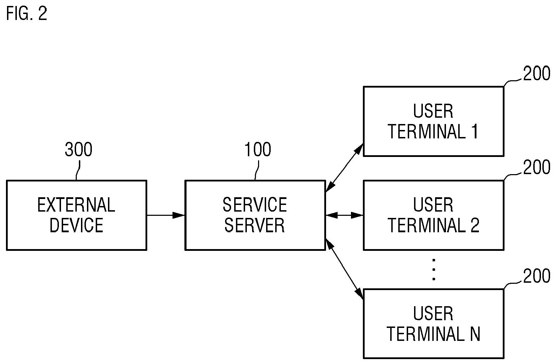

FIG. 2 illustrates a system for evaluating the relevance of a keyword to an asset price according to an embodiment. For ease of description, the system for evaluating the relevance of a keyword to an asset price will hereinafter be referred to as a system. Referring to FIG. 2, the system may include a service server 100, user terminals 200, and an external device 300.

The service server 100, the user terminals 200 and the external device 300 are computing devices connected to each other through the Internet. The service server 100 may be a service device which stores various information and one or more programs for implementing embodiments of the inventive concept. Each of the user terminals 200 may be any one of a fixed computing device, such as a server device or a desktop PC, and a mobile computing device such as a notebook computer, a smartphone or a tablet PC. In addition, the external device 300 may be a server device which stores text content available on the Internet. The external device 300 may also be a server device which stores information about assets and price information of the assets. For example, the external device 300 may be a stock information server of a stock exchange which provides stock price information.

In the system according to the embodiment, the service server 100 may collect text content posted on a first date from the external device 300 through the Internet. To this end, the service server 100 may store a web crawler which automatically searches web pages. For example, the first date may be the very date on which the service server 100 performs crawling. In this case, the service server 100 may collect text content posted on the Internet until a preset time of that date.

The service server 100 may extract a keyword from each piece of text content collected by the crawling of the web crawler. At this time, various algorithms may be used for keyword extraction. The service server 100 may store at least one program for algorithms used in keyword extraction. For example, the service server 100 may use a latent dirichlet allocation (LDA) algorithm. The service server 100 may determine the topic of the text content and extract keywords having high relevance to the topic using the LDA algorithm.

After extracting a keyword from each piece of the collected text content, the service server 100 may combine the keywords extracted from various sources. In so doing, the service server 100 may form a keyword pool of the extracted keywords of the first date. In the same way, the service server 100 may form a keyword pool of a second date. Here, the second date is a different date from the first date and may be an adjacent date within a preset range from the first date.

The service server 100 may compare the keyword pool of the first date with the keyword pool of the second date and generate one or more daily keywords of the first date using the comparison result.

The service server 100 may provide the generated daily keywords to the user terminals 200. In addition, the service server 100 may provide various services to each of the user terminals 200 using the daily keywords. For example, the service server 100 may provide an investment guidance service to the user terminals 200 using the daily keywords.

According to an embodiment, the service server 100 may generate one or more daily keywords of the first date based on text content collected from the external device 300 through the Internet. In addition, the service server 100 may generate daily appearance frequency information of each daily keyword of the first date.

The service server 100 may compare the generated daily appearance frequency information of each daily keyword with daily price information of each pre-registered asset. Accordingly, the service server 100 may determine which of the pre-registered assets corresponds to each daily keyword.

The service server 100 may transmit information about the daily keywords of the first date and an asset corresponding to each daily keyword to the user terminals 200.

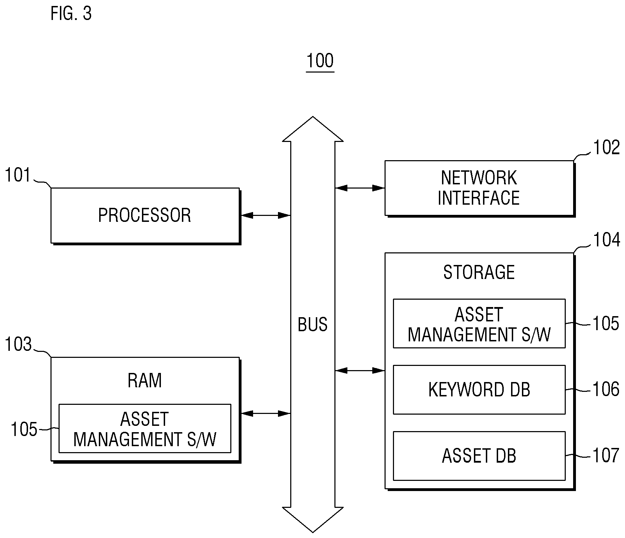

FIG. 3 is a block diagram of a service server 100 according to an embodiment.

Referring to FIG. 3, the service server 100 may include a processor 101, a network interface 102, a memory 103, and a storage unit 104.

The processor 101 controls the overall operation of each component of the service server 100. The processor 101 may be a central processing unit (CPU), a microprocessor unit (MPU), a microcontroller unit (MCU), or any processor well known in the art to which the inventive concept pertains. In addition, the processor 101 may perform an operation on at least one application or program for executing methods according to embodiments. The service server 100 may include one or more processors.

The network interface 102 supports wired and wireless Internet communication of the service server 100. The network interface 102 may also support various communication methods other than the Internet communication. To this end, the network interface 102 may include various communication modules.

The network interface 102 may collect text content from the external device 300 through the Internet. In addition, the network interface 102 may transmit or receive information about keywords and assets to or from the user terminals 200.

The memory 103 stores various data, commands and/or information. In addition, the memory 103 may store one or more programs for loading one or more programs 105 from the storage unit 104 to perform a method of automatically generating a daily keyword using text content and a method of evaluating the relevance of a keyword to an asset price according to embodiments. In FIG. 3, a random access memory (RAM) is illustrated as an example of the memory 103.

The storage unit 104 may non-temporarily store data received from the external device 300. The storage unit 104 may be a nonvolatile memory such as a read only memory (ROM), an erasable programmable ROM (EPROM), an electrically erasable programmable ROM (EEPROM) or a flash memory, a hard disk, a removable disk, or any computer-readable recording medium well known in the art to which the inventive concept pertains.

The storage unit 104 may store one or more programs 105 for performing methods according to embodiments. In FIG. 3, asset management software is illustrated as an example of the programs 105.

A database (DB) 106 of keyword pools and daily keywords may be installed in the storage unit 104. In addition, a DB 107 of pre-registered assets and an asset corresponding to each keyword may be installed in the storage unit 104.

Although not illustrated in the drawing, the service server 100 may further include an input unit for inputting various settings and information and an output unit for displaying information. The input unit and the output unit may respectively include any input medium and any output medium well known in the art to which the inventive concept pertains.

In the present specification, the service server 100 may be referred to as an apparatus for evaluating the relevance of a keyword to an asset price because it performs a method of evaluating the relevance of a keyword to an asset price. In addition, the service server 100 may be referred to as an apparatus for automatically generating a daily keyword because it performs a method of automatically generating a daily keyword using text content. The service server 100 may also simply be shortened to an apparatus.

It will hereinafter be assumed that methods according to embodiments are performed by the service server 100.

Based on the above description of FIGS. 1 through 3, embodiments of the inventive concept will hereinafter be described according to each method performed by the service server 100. The embodiments described below should not necessarily be implemented separately but can be implemented in combination. In addition, it should be noted that the embodiments described below can be implemented in combination with the embodiments described above with reference to FIGS. 1 through 3.

### Method of automatically generating a daily keyword using text content

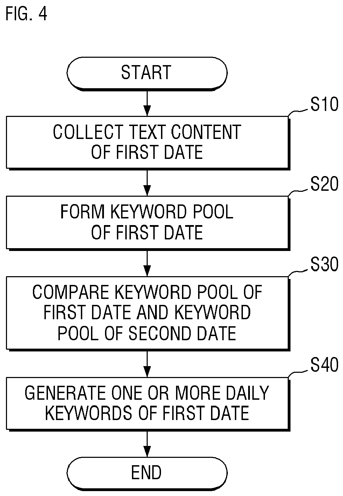

According to an embodiment, the apparatus 100 for automatically generating a daily keyword may perform a method of automatically generating a daily keyword using text content. The method of automatically generating a daily keyword using text content will now be described in detail with reference to FIGS. 4 through 12.

FIG. 4 is a flowchart illustrating a method of automatically generating a keyword using text content according to an embodiment. Referring to FIG. 4, the apparatus 100 may collect text content of a first date through the Internet (operation S10). The apparatus 100 may extract a keyword from each piece of the text content and form a keyword pool of the extracted keywords of the first date (operation S20). The method of collecting text content and extracting keywords has been described above with reference to FIG. 1. To generate one or more daily keywords of the first date, the apparatus 100 may use text content collected until a preset time of the first date.

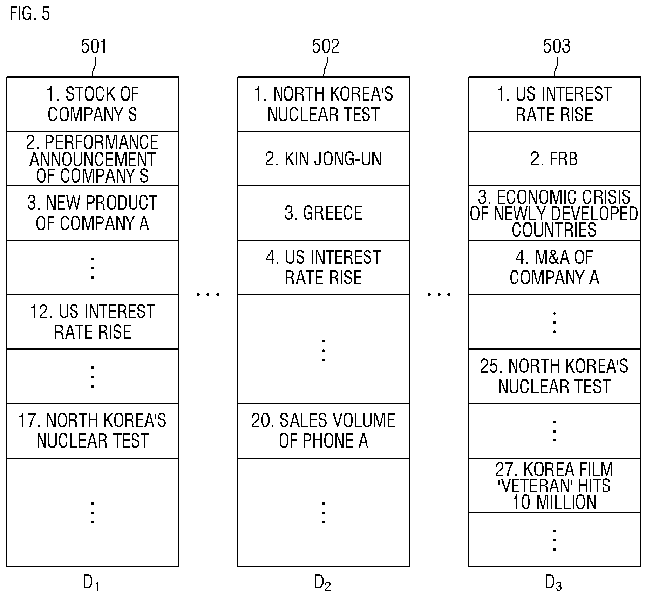

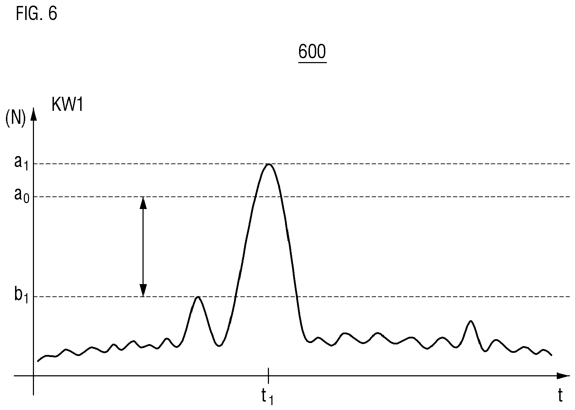

FIG. 5 illustrates keyword pools which are referred to in some embodiments. In addition, FIG. 6 illustrates a daily keyword which is referred to in some embodiments.

Referring to FIG. 5, the apparatus 100 may form a keyword pool 501 by extracting keywords from text content posted on date D1. In addition, the apparatus 100 may form a keyword pool 502 and a keyword pool 503 by extracting keywords from text content posted on date D2 and text content posted on date D3, respectively. Each of the keyword pools 501 through 503 may include a preset number of keywords. In addition, each of the keyword pools 501 through 503 may include keywords listed in order of largest number of extractions. The keyword pools 501 through 503 may be stored in the storage unit 104 of the apparatus 100.

The apparatus 100 may compare the keyword pool of the first date and a keyword pool of a second date (operation S30). In the above example, the apparatus 100 may compare the keyword pool 501, the keyword pool 502, and the keyword pool 503. Using the comparison result, the apparatus 100 may generate one or more daily keywords of the first date (operation S40).

Here, a daily keyword is a keyword that appears in text content collected on a specific date with a frequency distinguished from frequencies on other dates. That is, a daily keyword of the first date is a keyword that distinguishes the first date from other dates. For example, if a particular issue occurs on the first date, the Internet search for the particular issue may increase rapidly, and the issue may be mentioned in many web pages. In this case, many keywords indicating the issue may be included in text content collected by the apparatus 100. Accordingly, the apparatus 100 may form a keyword pool of the keywords indicating the issue. The apparatus 100 may generate a keyword existing in high proportion in the keyword pool as a daily keyword of the first date.

In FIG. 6, a graph 600 of the time-series appearance frequency of keyword 1 KW1 in text content is illustrated. It is assumed that keyword 1 KW1 is "North Korea's nuclear test" included in the keyword pools 501 through 503 of FIG. 5. In addition, it is assumed that date D2 is t1 in FIG. 6.

Referring to FIGS. 5 and 6, the appearance frequency of keyword 1 KW1 is higher on date D2 than on other dates. In FIG. 5, the appearance frequency of keyword 1 KW1 ranked 17^{th} on date D1, 1^{st} on date D2, and 25^{th} on date D3. That is, the keyword "North Korea's nuclear test" is a keyword that distinguishes date D2 from date D1 and date D3.

In operation S30, the apparatus 100 may compare the appearance frequency of each keyword included in the keyword pool of the first date with the appearance frequency of each keyword included in the keyword pool of the second date. In particular, the apparatus 100 may determine a keyword whose appearance frequency on the first date is different from appearance frequencies on other dates by a threshold value or more to be a daily keyword of the first date. It is assumed that the appearance frequency of keyword 1 KW1 ranked 17^{th} in the keyword pool 501 is b1 in FIG. 6. In addition, it is assumed that the difference between appearance frequency a0 and appearance frequency b1 is the threshold value.

Referring to FIG. 6, the appearance frequency of keyword 1 KW1 on date D2 is a1. Here, the difference between a1 and b1 has a larger value than the difference (i.e., the threshold value) between a0 and b1. Accordingly, the apparatus 100 may determine keyword 1 KW1 to be a daily keyword of date D2.

To ensure the accuracy of a daily keyword, various embodiments may be used in operation S30, in addition to the method of comparing the keyword pools of the first and second dates.

For example, the apparatus 100 may identify the appearance frequency of each keyword included in the keyword pool (formed in operation S30) of the first date during a particular date section. To this end, the apparatus 100 may determine a first time window based on the first date. That is, the apparatus 100 may compare the keyword pool formed based on the text content collected on the first date with a keyword pool formed based on text content collected during the first time window. Here, the first time window may be a date section consisting of a plurality of dates including the second date.

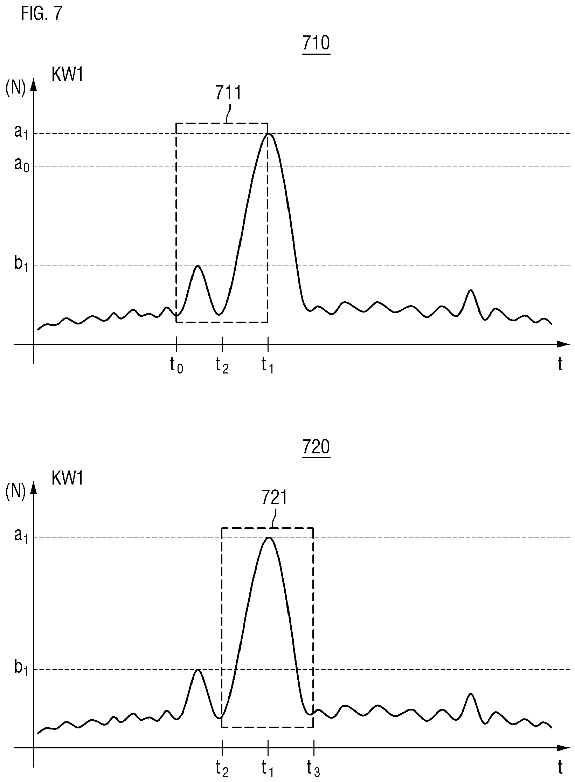

FIG. 7 illustrates a first time window for determining a daily keyword, which is referred to in some embodiments. In FIG. 7, it is assumed that the first date is t1.

Referring to FIG. 7, the apparatus 100 may determine a section including dates before t1 on a graph 710 to be a first time window 711. Alternatively, as shown on a graph 720, the apparatus 100 may determine a date section including t1 to be a first time window 721. The size of the first time window 711 or 721 may be determined by a user or manufacturer of the apparatus 100.

Referring to the graph 710, the apparatus 100 may measure the daily appearance frequency of keyword 1 KW1 included in keyword pools during the first time window 711. That is, the apparatus 100 may measure the frequency of a keyword which appears repeatedly by comparing keyword pools of dates within the first time window 711. When the difference in the appearance frequency of keyword 1 KW1 between t1 and t2 is equal to or greater than a threshold value, the apparatus 100 may determine keyword 1 KW1 to be a daily keyword of t1. On the other hand, when the difference in the appearance frequency of keyword 1 KW1 between t0 and t2 is less than the threshold value, the apparatus 100 may not determine keyword 1 KW1 to be a daily keyword of t2.

Referring to the graph 720, the apparatus 100 may measure the daily appearance frequency of keyword 1 KW1 during the first time window 721. The apparatus 100 may compare appearance frequencies of keyword 1 KW1 at t2 and t3 with the appearance frequency of keyword 1 KW1 at t1. When the difference in the appearance frequency of keyword 1 KW1 between t1 and each of t2 and t3 is equal to or greater than a threshold value, the apparatus 100 may determine keyword 1 KW1 to be a daily keyword of t1.

According to an embodiment, the apparatus 100 may determine a daily keyword without considering the appearance frequency of keyword 1 KW1.

For example, the keyword pool of the first date may include a new keyword. Here, the new keyword may be a keyword which is not included in a daily keyword pool of at least one other date included in the first time window. Alternatively, the new keyword may be a keyword which was posted a very small number of times during the first time window.

The apparatus 100 may determine whether a new keyword exists in the keyword pool of the first date. In addition, the apparatus 100 may determine whether the new keyword was posted a predetermined number of times or more on the first date.

When determining that the new keyword was posted the predetermined number of times or more, the apparatus 100 may determine the new keyword to be a daily keyword of the first date. For the new keyword which has not been posted on other dates, it is not necessary for the apparatus 100 to compare the keyword pool of the first date with keyword pools of other dates.

The apparatus 100 may generate a daily keyword of the first date by performing the above process on each keyword included in the keyword pool of the first date. That is, the first date may have one or more daily keywords.

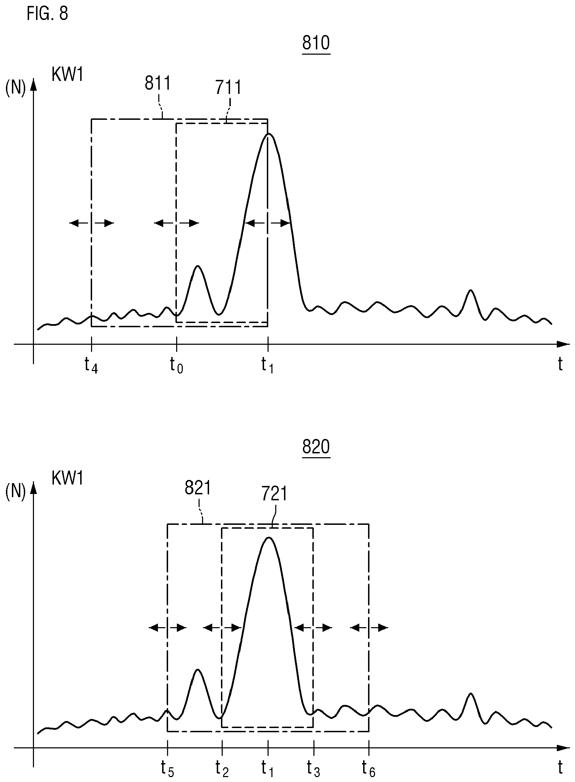

FIG. 8 illustrates a second time window for determining a daily keyword, which is referred to in some embodiments. In FIG. 8, it is assumed that the first date is t1.

To determine the appearance frequency of keyword KW1 based on the first date, the apparatus 100 may determine not only the first time window but also a second time window. The second time window may be a date section including more dates than the first time window.

The apparatus 100 may determine date sections before t1 to be the first and second time windows. On a graph 810, a first time window 711 is a date section from t1 to t0, and a second time window 811 is a date section from t1 to t4.

Alternatively, the apparatus 100 may determine date sections including t1 to be the first and second time windows. On a graph 820, a first time window 721 is a date section between t2 and t3 which includes t1, and a second time window 821 is a date section between t5 and t6 which includes t1.

The apparatus 100 may identify the number of times that keyword 1 KW1 was posted in text content collected during the second time window 811 or 821 and the number of times that keyword 1 KW1 was posted in text content collected during the first time window 711 or 721. In addition, the apparatus 100 may calculate a ratio of the numbers of times that keyword 1 KW1 was posted and determine whether to remove each keyword included in a keyword pool of the first date based on the calculation result.

When the ratio of the number of times that keyword 1 KW1 was posted during the second time window and the number of times that keyword 1 KW1 was posted during the first time window is equal to or greater than a threshold value, the apparatus 100 may leave keyword 1 KW1 in the keyword pool. When the ratio is less than the threshold value, the apparatus 100 may remove keyword 1 KW1 from the keyword pool.

It is assumed that the threshold value is 0.7. In an example, keyword 1 KW1 may be posted 100 times during the second time window and 80 times during the first time window. In this case, the ratio of the numbers of times that keyword 1 KW1 was posted during the first and second time windows is 0.8. Since the ratio of 0.8 is greater than 0.7, the apparatus 100 may leave keyword 1 KW1 in the keyword pool. It can be understood here that keyword 1 KW1 was posted intensively during the first time window.

In another example, keyword 1 KW1 may be posted 100 times during the second time window and 20 times during the first time window. In this case, a ratio of the numbers of times that keyword 1 KW1 was posted is 0.2. Since the ratio of 0.2 is less than 0.7, the apparatus 100 may remove keyword 1 KW1 from the keyword pool. It can be understood here that keyword 1 KW1 was posted more in other time sections than in the first time window.

A case where the first time window and the second time window are date sections has mainly been described above. According to an embodiment, the first time window and the second time window may be time sections, not date sections. In this case, it is assumed that the apparatus 100 forms a keyword pool based on text content collected until a preset time of the first date in operations S10 and S20.

For example, when a user terminal 200 accesses the service server 100 at 2 p.m. in the system of FIG. 1, the apparatus 100 (i.e., the service server 100) may generate one or more daily keywords based on the time of access. Here, the apparatus 100 may determine the first time window to be a time section until 2 hours before the access time of the first date. In this case, the apparatus 100 may compare a keyword pool formed based on text content collected until 2 hours before the access time with a keyword pool formed based on the access time.

The size of each of the first time window and the second time window may be determined by the user or manufacturer of the apparatus 100. Alternatively, the size of each of the first time window and the second time window may be adjusted according to the user setting of the user terminal 200 which receives services according to embodiments from the apparatus 100. Accordingly, daily keywords of the first date may vary according to the user setting of the user terminal 200. To this end, the apparatus 100 may provide the user terminal 200 with a user interface for adjusting the size of each of the first time window and the second time window.

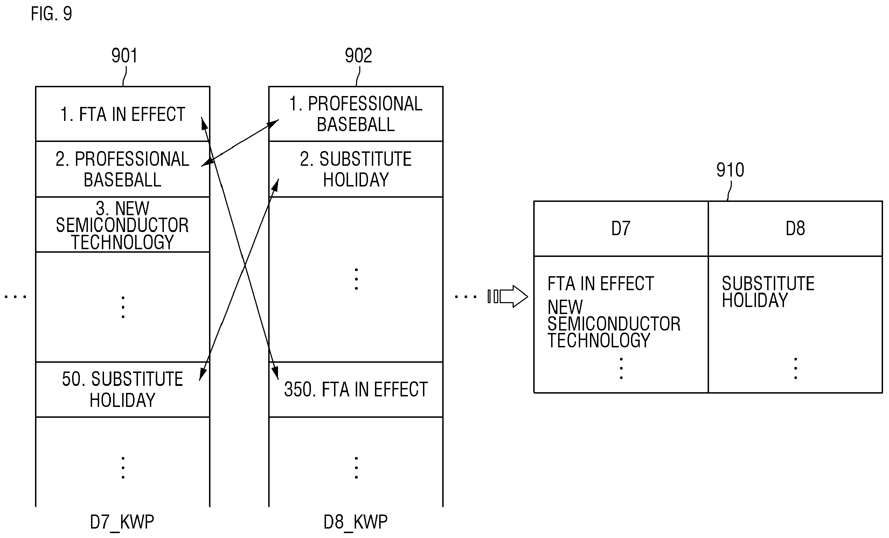

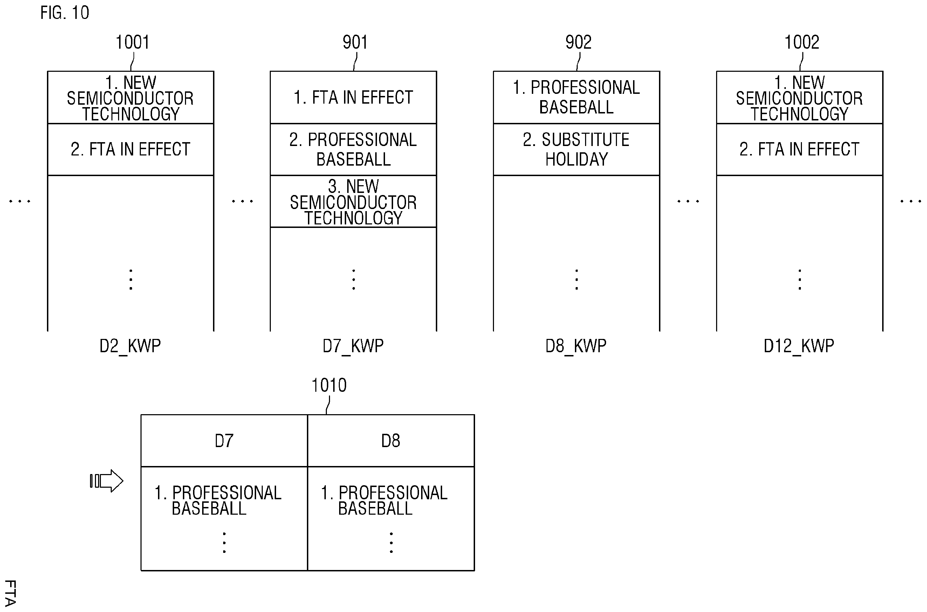

FIG. 9 illustrates a keyword refinement process using the first time window, and FIG. 10 illustrates a keyword refinement process using the first time window and the second time window. The effects of the first time window and the second time window will now be described in detail with reference to FIGS. 9 and 10. In FIGS. 9 and 10, it is assumed that the first time window is a date section including the first date.

Referring to FIG. 9, when the first date is date D7, the apparatus 100 may form a keyword pool 901 of the first date. The keyword pool 901 may include keywords such as "FTA in effect," "professional baseball," and "new semiconductor technology" in order of appearance frequency. In addition, the keyword pool 901 may include "substitute holiday" with low appearance frequency as a keyword.

A keyword pool 902 of date D8 may include keywords such as "professional baseball" and "substitute holiday" in order of appearance frequency. In addition, the keyword pool 902 may include "FTA in effect" with low appearance frequency as a keyword.

The apparatus 100 may compare the keyword pool 902 of date D8 and the keyword pool 901 of date D7 included in the first time window. Referring to FIG. 9, the appearance frequency of the keyword "FTA in effect" is very high on date D7 but very low on date D8. In this case, the apparatus 100 may leave the keyword "FTA in effect" in the keyword pool 901 of date D7. In addition, when the difference between the appearance frequencies of the keyword "FTA in effect" on date D7 and date D8 is equal to or greater than a threshold value, the apparatus 100 may determine the keyword "FTA in effect" to be a daily keyword 910 of date D7. In the same way, the apparatus 100 may determine the keyword "new semiconductor technology" to be a daily keyword 910 of date D7.

On the other hand, the appearance frequency of the keyword "professional baseball" is not greatly different between date D7 and date D8. Therefore, the apparatus 100 may remove the keyword "professional baseball" from the keyword pool 901 of date D7. Accordingly, the keyword "professional baseball" may not be determined to be a daily keyword of date D7.

When the first date is date D8, the apparatus 100 may form the keyword pool 902 of the first date. The apparatus 100 may compare the keyword pool 901 of date D7 and the keyword pool 902 of date D8 included in the first time window. Referring to FIG. 9, the appearance frequency of the keyword "substitute holiday" is very high on date D8 but very low on date D7. In this case, the apparatus 100 may leave the keyword "substitute holiday" in the keyword pool 902 of date D8. In addition, when the difference between the appearance frequencies of the keyword "substitute holiday" on date D8 and date D7 is equal to or greater than the threshold value, the apparatus 100 may determine the keyword "substitute holiday" to be a daily keyword 910 of date D8. On the other hand, the appearance frequency of the keyword "professional baseball" is not greatly different between date D8 and date D7. Therefore, the apparatus 100 may remove the keyword "professional baseball" from the keyword pool 902 of date D8. Accordingly, the keyword "professional baseball" may not be determined to be a daily keyword of date D8.

In the above example, only the keyword pool 901 of date D7 which is the first date and the keyword pool 902 of date D8 included in the first time window are compared. However, the apparatus 100 may also compare keyword pools of a plurality of dates included in the first time window with the keyword pool 901 of the first date.

The apparatus 100 may determine the second time window which includes the first time window referred to in the description of FIG. 9. In FIG. 10, it is assumed that the second time window is a date section including date D2 and date D12.

When the first date is date D7, the apparatus 100 may compare a plurality of keyword pools including a keyword pool 1001 of date D2, the keyword pool 902 of date D8 and a keyword pool 1002 of date D12 with the keyword pool 901 of date D7.

The apparatus 100 may identify the number of times that each of the keyword "FTA in effect" and the keyword "new semiconductor technology" was posted during the first time window including date D7 and date D8. In addition, the apparatus 100 may determine the number of times that each of the keyword "FTA in effect" and the keyword "new semiconductor technology" was posted during the second time window excluding the first time window. Referring to FIG. 10, both the keyword "FTA in effect" and the keyword "new semiconductor technology" were posted many times in the second time window. The apparatus 100 may remove the keyword "FTA in effect" and the keyword "new semiconductor technology" from the keyword pool 901 of date D7 based on ratios of the numbers of times that each of the keyword "FTA in effect" and the keyword "new semiconductor technology" was posted on date D7 and other dates included in the second time window. Accordingly, daily keywords 1010 of date D7 may not include the keyword "FTA in effect" and the keyword "new semiconductor technology."

On the other hand, the keyword "professional baseball" was posted many times during the first time window including date D7 and date D8 but was posted a small number of times on other dates or was not included in keyword pools of other dates. Therefore, the apparatus 100 may leave the keyword "professional baseball" in the keyword pool 902 of date D8 and 901 of date D7 based on ratios of the numbers of times that the keyword "professional baseball" was posted on date D8, D7, and other dates included in the second time section. Accordingly, the daily keywords 1010 may include the keyword "professional baseball."

When the first date is date D8, similar results to the results of the above example may be obtained. That is, daily keywords of different dates may include the same keyword. In addition, daily keywords of successive dates may include the same keyword. For example, when a particular issue affects the society at large for a considerable period of time, the apparatus 100 may extract the same keyword on different dates using the second time window.

Referring to FIGS. 9 and 10, even when the same keyword pool 901 or 902 is formed for the same date D7 or D8, the apparatus 100 can generate different daily keywords 910 and 1010 using the second time window.

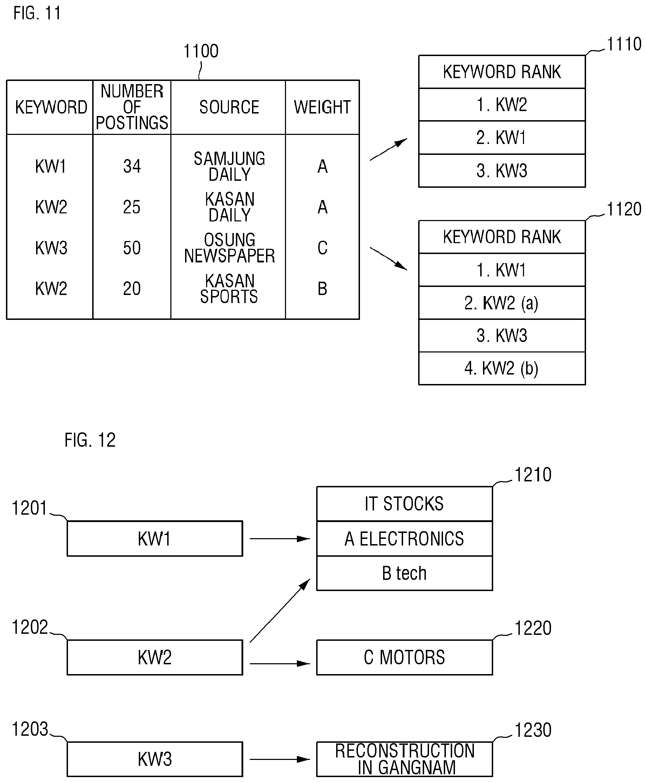

FIG. 11 illustrates priority rankings of daily keywords according to source, which are referred to in some embodiments. The apparatus 100 may identify sources of pieces of text content collected on the first date. The apparatus 100 may identify sources of pieces of text content including daily keywords of the first date.

Accordingly, the apparatus 100 may prioritize the daily keywords of the first date based on the identified sources. The apparatus 100 may prioritize the daily keywords based on attributes of the identified sources. The attributes of a source may be determined according to the nature of the source, the media type of the source, the channel type of the source, etc. For example, the nature of the source may be information about whether the source is a public institution, a private institution, or an individual. The media type of the source may be information about whether the source is an economic media, a sports media, etc. In addition, the channel type of the source may be information about whether the source is Internet news, a blog, an SNS, etc. The attributes of the source may also be determined based on text content identified using the above-described keyword extraction algorithm.

The apparatus 100 may identify different sections of the same source as different sources. For example, the apparatus 100 may identify an entertainment news section and a political news section of Internet news provided by newspaper company A as different sources.

The apparatus 100 may give a different weight to a keyword according to attributes. Referring to FIG. 11, the apparatus 100 may store daily keyword information 1100 including sources of daily keywords generated in operation S30 and weight information according to the attributes of the sources. Based on the daily keyword information 1100, the apparatus 100 may generate keyword priority information 1110.

Referring to the keyword information 1100, for example, weight A may be 1, weight B may be 0.5, and weight C may be 0.3. In this case, keyword 2 KW2 may have a priority score of (25x1)+(20x0.5)=35, and keyword 1 KW1 may have the number of times (i.e., 34) that it was posted as a priority score. In addition, keyword 3 KW3 may have a priority score of (50x0.3)=1.5

Accordingly, the apparatus 100 may generate the keyword priority information 1110. Referring to the keyword priority information 1110, keyword 2 KW2 having a highest priority score may be ranked highest by the apparatus 100.

Even the same keyword obtained from different sources may have different influences on the price of an asset. Accordingly, the apparatus 100 may need to identify the same keyword obtained from different sources as different keywords.

According to an embodiment, when one of the daily keywords of the first date has different sources, the apparatus 100 may recognize the daily keyword as different keywords. Referring to FIG. 11, the apparatus 100 may identify that keyword 2 KW2 has different sources of 'KASAN Daily' and 'KASAN Sports.' In addition, since the media types of the sources are different, the apparatus 100 may determine that the attributes of the sources are different. In the above example, the apparatus 100 may determine keyword 2 KW2 of 'KASAN Daily' and keyword 2 KW2 of 'KASAN Sports' to be different keywords according to the attributes of the different sources.

Therefore, even if homophones are generated as daily keywords of the first date, the apparatus 100 can identify the homophones as different keywords.

In some embodiments, an asset to be matched with each keyword may be limited to an asset matched in advance with the source of each keyword. For example, an entertainment related source (e.g., an entertainment section of an Internet newspaper) may be matched in advance with an entertainment related stock. Therefore, it may only be determined whether there is a correlation between a keyword obtained from an entertainment related source and the entertainment related stock in order to match the keyword with the entertainment related stock.

FIG. 12 illustrates assets matched with keywords which are referred to in some embodiments. As described above, the apparatus 100 may identify sources of text content including daily keywords of the first date. In addition, the apparatus 100 may match the daily keywords with corresponding assets according to the sources of the text content.

In FIG. 12, keyword 1 KW1 (1201), keyword 2 KW2 (1202) and keyword 3 KW3 (1203) are illustrated as examples of the daily keywords of the first date.

The source of text content including keyword 1 KW1 (1201) may be a blog which forecasts IT stock prices. In this case, the apparatus 100 may match keyword 1 KW1 (1201) with an asset 1210. The asset 1210 may be a stock of an individual company or a group of stocks included in a particular category.

The source of text content including keyword 2 KW2 (1202) may be an Internet magazine which posts articles about test drives. In this case, the apparatus 100 may match keyword 2 KW2 with an asset 1220. The asset 1220 may be a stock of an automobile company. In addition, the source of text content including keyword 3 KW3 may be a real estate related Internet community. In this case, the apparatus 100 may match keyword 3 KW3 (1203) with an asset 1230. The asset 1230 may be ownership rights of an apartment to be reconstructed in a specific area.

Until now, embodiments related to the method of automatically generating a daily keyword using text content which is performed by the apparatus 100 for automatically generating a daily keyword have been described. Hereinafter, embodiments related to methods of using the generated daily keyword will be described.

### Method of evaluating the relevance of a keyword to an asset price

To identify the influence of each daily keyword generated in the above-described embodiment on the price of an asset, it should be determined which asset corresponds to each daily keyword. Then, it should be analyzed how each daily keyword affects a corresponding asset. A method of determining an asset corresponding to each keyword and analyzing the influence of each keyword on a corresponding asset will become apparent from embodiments described below.

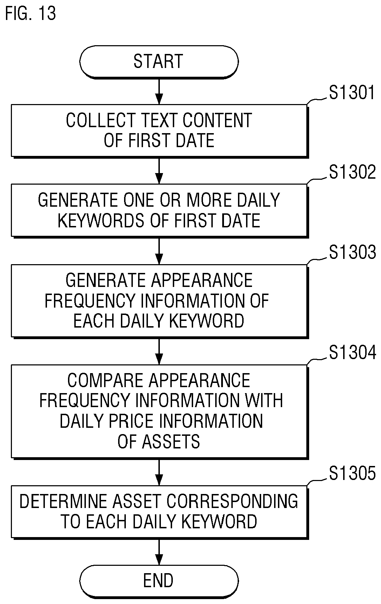

According to an embodiment, the apparatus 100 for evaluating the relevance of a keyword to an asset price may perform the method of evaluating the relevance of a keyword to an asset price. The method of evaluating the relevance of a keyword to an asset price which is performed by the apparatus 100 for evaluating the relevance of a keyword to an asset price will now be described in detail with reference to FIGS. 13 through 20.

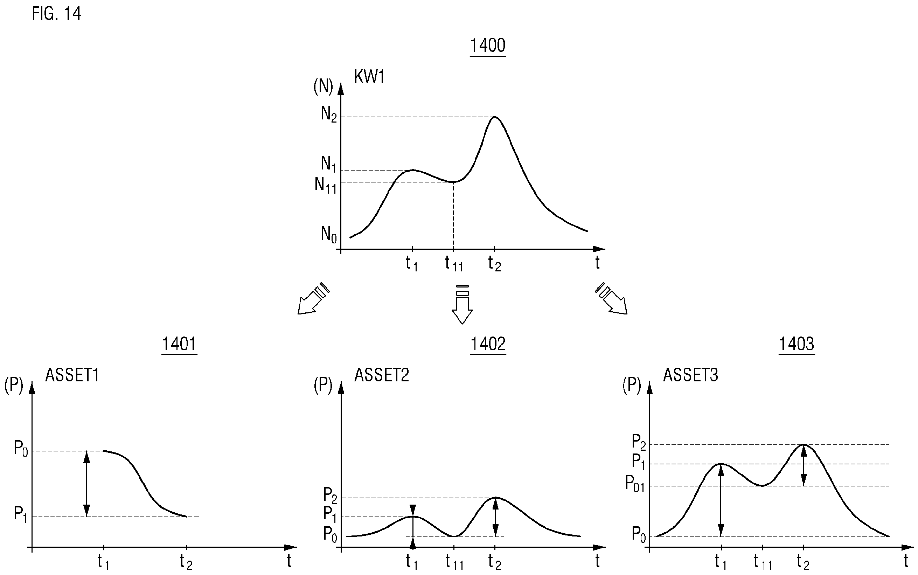

FIG. 13 is a flowchart illustrating a method of evaluating the relevance of a keyword to an asset price according to an embodiment. In addition, FIG. 14 illustrates an example process of determining an asset corresponding to a keyword, which is referred to in some embodiments.

Referring to FIG. 13, the apparatus 100 may collect text content posted on a first date through the Internet (operation S1301). The apparatus 100 may generate one or more daily keywords of the first date by extracting a keyword from each piece of the text content (operation S1302). As a specific method of generating the daily keywords of the first date, the apparatus 100 may use the above-described method of automatically generating a daily keyword using text content.

The apparatus 100 may generate daily appearance frequency information of each daily keyword of the first date (operation S1303). The appearance frequency information may be, for example, information expressed as a histogram of the daily appearance frequency of each generated daily keyword. In FIG. 14, a graph 1400 is illustrated as an example of the appearance frequency information. The appearance frequency information may include daily appearance frequency information in a preset date section. Referring to FIG. 14, keyword 1 KW1 has an appearance frequency of N1 on date t1 and an appearance frequency of N2 on date t2. In addition, keyword 1 KW1 has an appearance frequency of N11 on date t11 located between date t1 and date t2.

The apparatus 100 may compare the daily appearance frequency information of each generated daily keyword with daily price information of each pre-registered asset (operation S1304). The apparatus 100 may receive information about assets and hourly and daily price information of the assets from the external device 300 of FIG. 1. The apparatus 100 may register the received information in the storage unit 104. In FIG. 14, daily price information of asset 1 ASSET1, daily price information of asset 2 ASSET2 and daily price information of asset 3 ASSET3 are respectively illustrated on graphs 1401, 1402 and 1403 as examples of the daily price information of the pre-registered assets.

Referring to the graph 1401, asset 1 ASSET1 has a price of P0 on date t1 and a price of P1 on date t2. Referring to the graph 1402, asset 2 ASSET2 has a price of P1 on date t1 and a price of P2 on date t2. In addition, asset 2 ASSET2 has a price of P0 on date t11 located between date t1 and date t2. Referring to the graph 1403, asset 3 ASSET3 has a price of P1 on date t1 and a price of P2 on date t2. In addition, asset 3 ASSET3 has a price of P01 on date t11 between date t1 and date t2.

The apparatus 100 may determine an asset corresponding to each daily keyword by comparing the daily appearance frequency information of each daily keyword and the daily price information of each pre-registered asset (operation S1305). That is, the apparatus 100 may determine which of the pre-registered assets corresponds to a particular keyword. Here, the apparatus 100 may identify, among the pre-registered assets, an asset whose daily price change during a second period is equal to or greater than a threshold value in response to the daily appearance frequency of each keyword during a first period. The apparatus 100 may determine the identified asset to be an asset corresponding to each keyword.

Here, the first period is a period of time during which the appearance frequency information of each keyword is measured. The first period is a preset date section. The second period is a period of time during which each keyword affects a corresponding asset. The second period may be a section that begins after a certain period of time has elapsed from the first period. This is because a certain keyword may not immediately affect a change in the price information of a corresponding asset. For example, if keyword A which affects asset A is generated as a daily keyword, the price of asset A may be changed two days later. Alternatively, the second period may be a section including the first period. If a certain keyword immediately affects a change in the price information of a corresponding asset, the second period may be the same period as the first period. The length or starting point of the second period based on the first period may be set by the user or manufacturer of the apparatus 100.

The daily appearance frequency information of keyword 1 KW1 is compared with the daily price information of asset 1 ASSET1.

Referring to the graph 1400, the appearance frequency of keyword 1 KW1 increases from N0 to N1 during the first period extending from a predetermined initial date to t1. Referring to the graph 1401, the price of asset 1 ASSET1 falls continuously from P0 during the second period which lasts a predetermined date section after t1. Here, asset 1 ASSET1 may be an asset whose price is reduced by the influence of keyword 1 KW1. Referring back to the graph 1400, the appearance frequency of keyword 1 KW1 decreases from N1 to N11 during a date section extending from t1 to t11. During this date section, the price of asset 1 ASSET1 falls continuously. The apparatus 100 may detect that the price of asset 1 ASSET1 falls continuously while the appearance frequency of keyword 1 KW1 increases or decreases. Accordingly, the apparatus 100 may determine that asset 1 ASSET1 is not affected by keyword 1 KW1.

The daily appearance frequency information of keyword 1 KW1 is compared with the daily price information of each of asset 2 ASSET2 and asset 3 ASSET3.

Referring to the graphs 1400, 1402 and 1403, the trend of the daily appearance frequency of keyword 1 KW1 matches the trend of the daily price change of each of asset 2 ASSET2 and asset 3 ASSET3. Accordingly, the apparatus 100 may determine that the daily price change of each of asset 2 ASSET2 and asset 3 ASSET3 corresponds to the daily appearance frequency of keyword 1 KW1. Here, the apparatus 100 may determine asset 3 ASSET3 whose price change is equal to or greater than a threshold value to be an asset corresponding to keyword 1 KW1 among asset 2 ASSET2 and asset 3 ASSET3. Since the price change of an asset can be affected by factors other than a keyword, the apparatus 100 may determine that asset 2 ASSET2 whose price change is less than the threshold value is an asset not affected by keyword 1 KW1.

Referring to the graph 1403, the price change of asset 3 ASSET3 shows a similar pattern to the appearance frequency of keyword 1 KW1. That is, when the appearance of keyword 1 KW1 increases, the price of asset 3 ASSET3 also increases. However, there may also be an asset whose price decreases as the appearance frequency of keyword 1 KW1 increases.

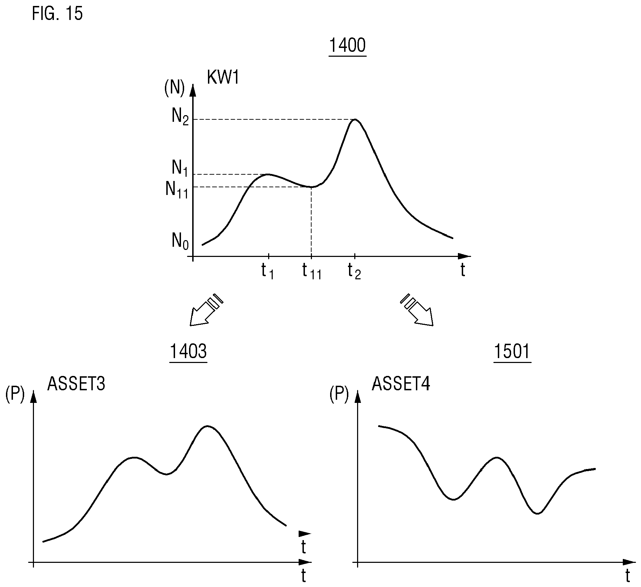

FIG. 15 illustrates another example process of determining an asset corresponding to a keyword, which is referred to in some embodiments. Referring to FIG. 15, the apparatus 100 may identify asset 3 ASSET3 and asset 4 ASSET4 whose price changes correspond to the appearance frequency of keyword 1 KW1. Here, a price change includes an absolute value of the price change. That is, referring to graphs 1400 and 1501, while the appearance frequency of keyword 1 KW1 has a positive value, the price change of asset 4 ASSET4 has a negative value. Even in this case, the apparatus 100 may determine asset 4 ASSET4 to be an asset corresponding to keyword 1 KW1.

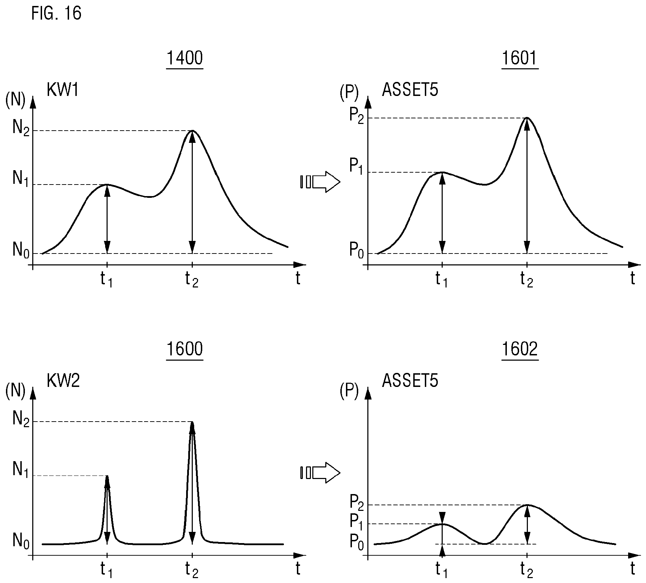

There may be a plurality of keywords corresponding to one asset. A method of determining a keyword having a high influence on a corresponding asset among a plurality of keywords will now be described with reference to FIG. 16.

FIG. 16 illustrates the influence of keywords on an asset, which is referred to in some embodiments. Here, it is assumed that a first date is t1 and a second date is t2. The second date t2 is a date after the first date t1.

The apparatus 100 may determine keyword 1 KW1 to be a daily keyword of the first date t1 in operation S1305. In addition, referring to FIG. 16, the apparatus 100 may compare appearance frequency information 1400 of keyword 1 KW1 with price information of each pre-registered asset and determine asset 5 ASSET5 to be an asset corresponding to the daily keyword (keyword1 KW1) based on the comparison result. Specifically, the apparatus 100 may identify asset 5 ASSET5 whose price change (from P0 to P1) during a second period is equal to or greater than a threshold value in response to an increase in the appearance frequency of keyword 1 KW1 from N0 to N1 during a first period. In FIG. 16, each of the first period and the second period extends from a predetermined initial date to t1.

Then, the apparatus 100 may generate one or more daily keywords of the second date t2. The apparatus 100 may determine whether the same keyword as any one of the daily keywords of the first date t1 is included in the daily keywords of the second date t2. For example, when keyword 1 KW1 of the first date t1 is "interest rate rise," the apparatus 100 may determine whether "interest rate rise" is also included in the daily keywords of the second date t2.

If the same keyword as any one of the daily keywords of the first date t1 is included in the daily keywords of the second date t2, the apparatus 100 may monitor daily price information of an asset determined to correspond to the keyword. Here, the apparatus 100 may monitor the daily price information of the asset for a period of time preset based on the second date t2. In FIG. 16, the preset period of time is from t1 to t2.

In the above example, the apparatus 100 may monitor daily price information of asset 5 ASSET5 corresponding to "interest rate rise." In FIG. 16, a graph 1601 is illustrated as an example of the daily price information of asset 5 ASSET5 corresponding to "interest rate rise." The apparatus 100 may monitor that the daily price of asset 5 ASSET5 changes from P1 to P2 as shown on the graph 1601 when the appearance frequency of "interest rate rise" changes from N1 to N2 as shown on the graph 1400.

Based on the monitoring result, the apparatus 100 may determine relevance information of the keyword "interest rate rise" to asset 5 ASSET5. Here, the relevance information may include information about whether the keyword "interest rate rise" has an influence on the price change of asset 5 ASSET5 and information about an influence index of the keyword "interest rate rise" on the price of asset 5 ASSET5.

The apparatus 100 may measure a ratio of the appearance frequency of the daily keyword ("interest rate rise") of the first date t1 and the price change of asset 5 ASSET5 and a ratio of the appearance frequency of the daily keyword ("interest rate rise") of the second date t2 and the price change of asset 5 ASSET5. Based on the measured ratios, the apparatus 100 may identify the influence of keyword 1 KW1 on asset 5 ASSET5.

In addition, when monitoring that the price change of asset 5 ASSET5 from t1 to t2 is equal to or greater than the threshold value, the apparatus 100 may update the relevance information of the keyword "interest rate rise" to asset 5 ASSET5. In the above example, when the difference between P1 and P2 on the graph 1601 is equal to or greater than the threshold value, the apparatus 100 may upgrade the influence index of the keyword "interest rate rise" on asset 5 ASSET5. This is because the relevance of the keyword "interest rate rise" to asset 5 ASSET5 which had been determined based on the first date t1 was reconfirmed based on the second date t2.

Similarly, when keyword 2 KW2 is determined to be a daily keyword of the first date t1, the apparatus 100 may determine asset 5 ASSET5 as an asset corresponding to keyword 2 KW2. It is assumed that keyword 2 KW2 is "inflation." The apparatus 100 may generate one or more daily keywords of the second date t2 and, if "inflation" is also included in the daily keywords of the second date t2, may identify the keyword "inflation" among the daily keywords of the second date t2

Then, the apparatus 100 may monitor the daily price information of asset 5 ASSET5 corresponding to the daily keyword (keyword 2 KW2) of the first date t1. In FIG. 16, a graph 1602 is illustrated as an example of the daily price information of asset 5 ASSET5 corresponding to "inflation." The apparatus 100 may monitor that the daily price of asset 5 ASSET5 changes from P1 to P2 as shown on the graph 1602 when the appearance frequency of "inflation" changes from N1 to N2 as shown on a graph 1600 . Accordingly, the apparatus 100 may identify the influence of keyword 2 KW2 on asset 5 ASSET5.

Based on the identified influence, the apparatus 100 may determine which of keyword 1 KW1 and keyword 2 KW2 has priority for asset 5 ASSET5.

The influence of each keyword on an asset ultimately denotes the influence of each daily keyword on the price of a corresponding asset. That is, the apparatus 100 may determine how much the price of an asset is increased or decreased by the influence of a keyword. The apparatus 100 may store the determination result as relevance information.

Then, the apparatus 100 may predict changes in the price of the asset on other dates based on the stored relevance information.

As described above, the apparatus 100 may determine the relevance information of each daily keyword to an asset. Various indices of the relevance information will now be described.

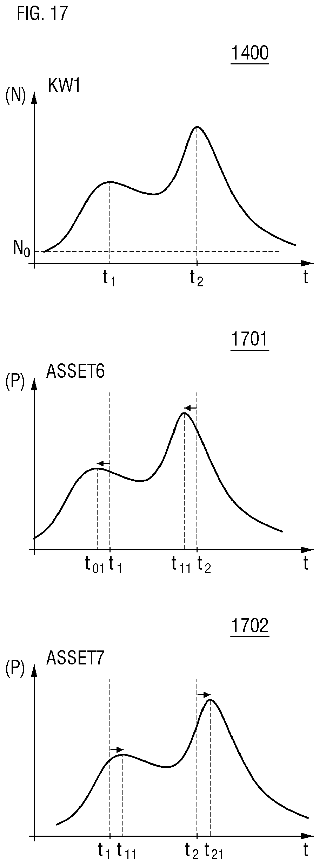

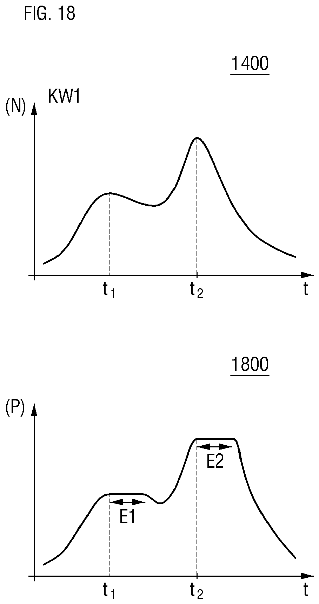

FIG. 17 illustrates the difference between a time when a keyword is generated and a time when the price of an asset is changed, which is referred to in some embodiments. FIG. 18 illustrates a period of time during which a keyword affects an asset, which is referred to in some embodiments.

In FIG. 17, it is assumed that keyword 1 KW1 is determined to be a daily keyword of the first date t1 and a daily keyword of the second date t2 as shown on a graph 1400. In addition, it is assumed that assets corresponding to keyword 1 KW1 are asset 6 ASSET6 and asset 7 ASSET7.

Referring to FIG. 17, while the appearance frequency of keyword 1 KW1 increased during a first period (from a predetermined initial date to t1), the price of asset 6 ASSET6 also increased during a second period (from a predetermined initial date to t01) as shown on a graph 1701.

The apparatus 100 may determine which of the first period and the second period precedes the other one. Then, the apparatus 100 may store the determination result as relevance information of keyword 1 KW1 (daily keyword of the first date t1) to asset 6 ASSET6. Referring to the graph 1701, the price of asset 6 ASSET6 changed before the generation date (the first date t1) of keyword 1 KW1.

Therefore, when keyword 1 KW1 is determined to be a daily keyword of the second date t2, the apparatus 100 may predict that the price of asset 6 ASSET6 will change before the second date t2 based on the stored relevance information.

On a graph 1702, the price of asset 7 ASSET7 increased during a second period (from a predetermined initial date to t11). In this case, the apparatus 100 may also determine which of the first period and the second period precedes the other one and store the determination result as relevance information of asset 7 ASSET7. Referring to the graph 1702, the price of asset 7 ASSET7 changed after the generation of keyword KW1.

Therefore, when keyword KW1 is determined to be a daily keyword of the second date t2, the apparatus 100 may predict that the price of asset 7 ASSET7 will change after the second date t2 based on the stored relevance information.

In addition, the apparatus 100 may measure a time gap between the first period and the second period. Then, the apparatus 100 may store the measurement result as the relevance information of keyword 1 KW1 to asset 7 ASSET7. Referring to the graph 1702, although keyword 1 KW1 was generated as a daily keyword on the first date t1, the price of asset 7 ASSET7 affected by keyword 1 KW1 changed on t11. Accordingly, the apparatus 100 may determine that keyword 1 KW1 begins to affect asset 7 ASSET7 after the time gap (t11-t1).

Therefore, when keyword 1 KW1 is determined to be a daily keyword of the second date t2, the apparatus 100 may predict that the price of asset 7 ASSET7 will change after a time gap (t21-t2) based on the stored relevance information.

In FIG. 18, it is assumed that keyword 1 KW1 is determined to be a daily keyword of the first date t1 and a daily keyword of the second date t2 as shown on a graph 1400.

Referring to FIG. 18, while the appearance frequency of keyword 1 KW1 increased during a first period (from a predetermined initial date to t1), the price of an asset increased as shown on a graph 1800. In addition, the increased price was maintained during a second period E1.

The apparatus 100 may store the second period E1 during which the influence of keyword 1 KW1 on the price of the asset was maintained as relevance information.

Therefore, when keyword 1 KW1 is determined to be a daily keyword of the second date t2, the apparatus 100 may predict that the price of the asset will be maintained during the second period E2 based on the stored relevance information.

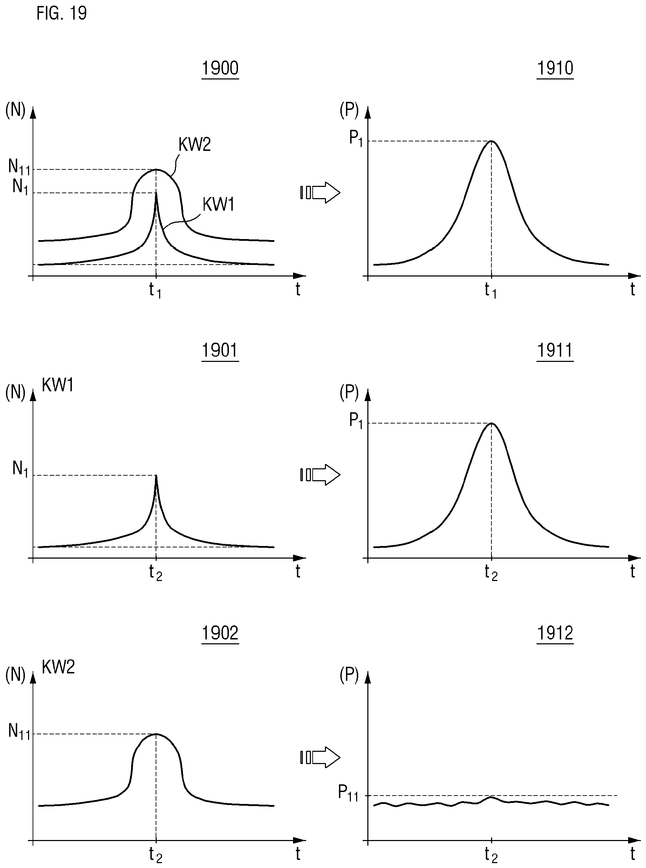

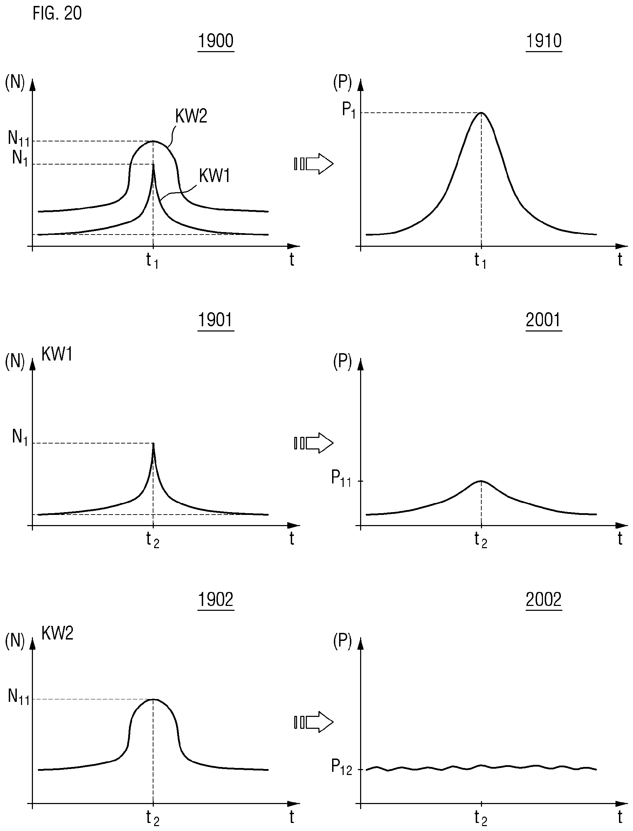

A plurality of daily keywords may be generated for the first date in operation S1302. If the price of a specific asset increases on the first date according to the appearance frequency information of the daily keywords, all of the daily keywords may affect the price of the asset. Alternatively, any one of the daily keywords may not affect the price of the asset. This will now be described with reference to FIGS. 19 and 20.

FIG. 19 illustrates a process of identifying a keyword that affects an asset among a plurality of keywords, which is referred to in some embodiments.

Referring to FIG. 19, it is assumed that keyword 1 KW1 and keyword 2 KW2 of a graph 1900 are included in daily keywords of the first date t1. In addition, a graph 1910 is illustrated in FIG. 19 as an example of an asset determined to correspond to keyword 1 KW1 and keyword 2 KW2.

In operation S1305, the apparatus 100 may determine that both keyword 1 KW1 and keyword 2 KW2 affect the determined asset based on the first date t1. When keyword 1 KW1 is determined to be a daily keyword of the second date t2, the apparatus 100 may identify that one of the daily keywords of the first date t1 has been determined again to be a daily keyword of the second date t2.

Therefore, the apparatus 100 may monitor daily price information of the determined asset during a period of time preset based on the second date t2.

In FIG. 19, a graph 1911 is illustrated as an example of the daily price information of the asset. The apparatus 100 may determine relevance information of keyword 1 KW1 to the asset based on the monitoring result. The apparatus 100 may compare the graphs 1910 and 1911 and determine that keyword 1 KW1 has high relevance to the asset based on the comparison result.

On the other hand, when keyword 2 KW2 is determined to be a daily keyword of the second date t2, the apparatus 100 may identify that one of the daily keywords of the first date t1 has been determined again to be a daily keyword of the second date t2. Therefore, the apparatus 100 may monitor the daily price information of the determined asset during a period of time preset based on the second date t2.

In FIG. 19, a graph 1912 is illustrated as an example of the daily price information of the asset. The apparatus 100 may determine relevance information of keyword 2 KW2 to the asset based on the monitoring result. The apparatus 100 may compare the graphs 1910 and 1912 and determine that keyword 2 KW2 has no relevance to the asset based on the comparison result. In this case, the apparatus 100 may modify its determination that both keyword 1 KW1 and keyword 2 KW2 affect the asset based on the first date t1. That is, since keyword 2 KW2 is irrelevant to the asset, the apparatus 100 may modify the daily keywords registered on the first date t1. Here, the apparatus 100 may also determine that there was an error in keyword generation on the first date t1 and adjust the size of each of the first window and the second window described above in the embodiment of the method of automatically generating a daily keyword using text content.

FIG. 20 illustrates an asset affected by a plurality of keywords, which is referred to in some embodiments. A repetitive description of features described above with reference to FIG. 19 will be omitted.

In operation S1305, the apparatus 100 may determine that both keyword 1 KW1 and keyword 2 KW2 affect an asset based on the first date t1. Then, the apparatus 100 may generate one or more daily keywords of the second date t2. If keyword 1 KW1 and keyword 2 KW2 are also included in the generated daily keywords of the second date t2, the apparatus 100 may monitor daily price information of the asset determined to correspond to the keywords (keyword 1 KW1 and keyword 2 KW2).

The apparatus 100 may determine relevance information of the keywords to the asset based on the monitoring result.

For example, it is assumed that both keyword 1 KW1 and keyword 2 KW2 which are daily keywords of the first date t1 affect the asset as shown on a graph 1910.

The apparatus 100 may generate keyword 1 KW1 as a daily keyword of the second date t2 as shown on a graph 1901. If the daily keyword (keyword 1 KW1) of the second date t2 does not affect the asset as shown on a graph 2001, the apparatus 100 may determine that keyword 1 KW1 is irrelevant to the asset.

If keyword 2 KW2 does not affect the asset as shown on a graph 2002, the apparatus 100 may also determine that keyword 2 KW2 is irrelevant to the asset.

It is assumed that the price of the asset increases to a threshold value or more when both keyword 1 KW1 and keyword 2 KW2 are included in daily keywords of another date as in the daily keywords of the first date t1.

Based on the price information of the asset on the first date t1, the second date t2 and another date, the apparatus 100 may determine that the asset is affected by a plurality of keywords (both keyword 1 KW1 and keyword 2 KW2) and not by an individual keyword.

Therefore, the apparatus 100 may store a pair of keyword 1 KW1 and keyword 2 KW2 as relevance information to the asset.

### Specific embodiment of an apparatus for evaluating the relevance of a keyword to an asset price

According to the above-described embodiments, the apparatus 100 may determine an asset corresponding to a daily keyword and analyze the influence of the daily keyword on the asset. In particular, based on relevance information of a daily keyword of a first date to a corresponding asset, the apparatus 100 may predict the influence of the daily keyword on the price of the asset on a second date. Then, the apparatus 100 may provide a user terminal 200 with an investment guidance service on the asset based on its prediction.

To provide the investment guidance service, the apparatus 100 may store information about daily keywords and assets corresponding to the daily keywords in the storage unit 104. In addition, the apparatus 100 may store the result of analyzing the influence of each daily keyword on a corresponding asset. For example, the apparatus 100 may store relevance information described above with reference to FIGS. 16 through 18.

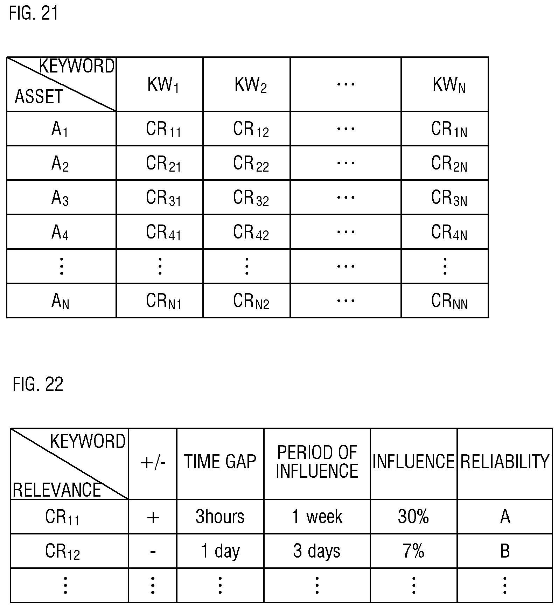

FIG. 21 illustrates relevance information of keywords to assets, which is referred to in some embodiments. In addition, FIG. 22 illustrates relevance indices of keywords to assets, which are referred to in some embodiments.

In FIG. 21, data about relevance information CR of each daily keyword KW to a corresponding asset A is illustrated. The data may be stored in the storage unit 104 of the apparatus 100. Referring to FIG. 21, the data may include daily keyword information of each date and asset information corresponding to the daily keyword information. In this case, the apparatus 100 may store the relevance information CR based on the generation date of each daily keyword KW. Alternatively, the apparatus 100 may store the relevance information CR of a corresponding daily keyword KW based on the type of each asset A. In addition, the data may include priority information based on sources of the daily keywords KW.

Each piece of the relevance information CR of FIG. 21 may include information about relevance indices. The relevance indices are information about the specific influence of each daily keyword on a corresponding asset.

Referring to FIG. 22, the relevance information CR includes information about the following relevance indices.

The relevance information CR may include information about the influence of a daily keyword on the price of an asset. That is, the relevance information CR is information about whether the price of an asset increases or decreases in response to a specific daily keyword generated.

The relevance information CR may include information about a time gap between a time when a daily keyword is generated and a time when the price of an asset is changed by the influence of the daily keyword. That is, the relevance information CR is information about how much time after the generation of a daily keyword the price of an asset is changed by the influence of the daily keyword.

The relevance information CR may include information about a period of time during which a daily keyword has an influence on the price change of an asset. That is, the relevance information CR is information about a period of time during which the price of an asset fluctuates continuously in response to a daily keyword generated.

The relevance information CR may include influence information of a daily keyword on the price of an asset. That is, the relevance information CR is information about how much the price of an asset is increased or decreased by a daily keyword generated.

The relevance information CR may include reliability information of the relevance indices. That is, the relevance information CR is information about the accuracy of predicting an asset price based on the relevance indices. For example, when there is relevance information stored for a daily keyword generated on a first date, if the same keyword as the daily keyword is generated on a second date after the first date, the apparatus 100 may determine whether the price of an asset is changed according to the relevance information of the first date. Then, the apparatus 100 may store the determination result as a relevance index in the relevance information CR of FIG. 22.

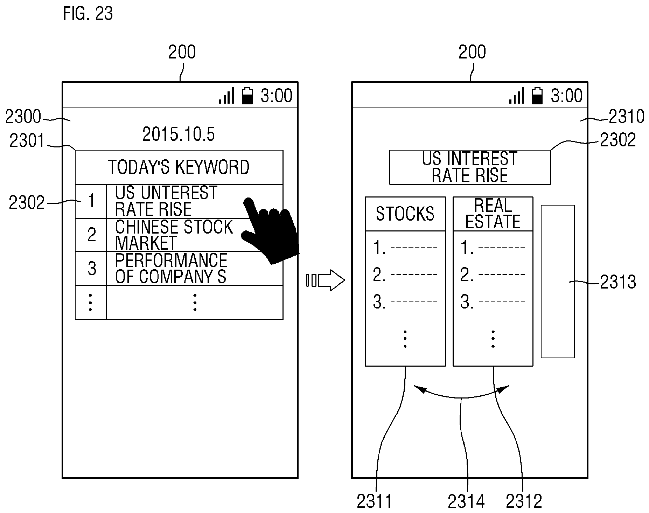

Hereinafter, the investment guidance service provided by the apparatus 100 to a user terminal 200 using the relevance information will be described with reference to FIGS. 23 through 26.

FIG. 23 illustrates an example graphic user interface (GUI) for providing daily keywords, according to an embodiment.

Referring to FIG. 23, the apparatus 100 may provide a GUI 2300 for the investment guidance service to a user terminal 200. The GUI 2300 may include daily keyword information 2301 of a first date. In FIG. 23, the GUI 2300 displays daily keywords generated based on text content collected on the first date as an example of the daily keyword information 2301 of the first date.

When any one 2302 of the daily keywords is selected through the user terminal 200, the apparatus 100 may generate an interface 2310 in response to the selection of the keyword 2302. In addition, the apparatus 100 may provide the interface 2310 to the user terminal 200.

The interface 2310 may include asset information corresponding to the selected keyword 2302. Specifically, the interface 2310 may include information about one or more assets 2311 through 2313 corresponding to the selected keyword 2302. In addition, the interface 2310 may include an interface 2314 for selecting the asset information by type.

The apparatus 100 may provide the investment guidance service using the relevance information of each keyword to an asset and the information about relevance indices described above with reference to FIGS. 21 and 22.

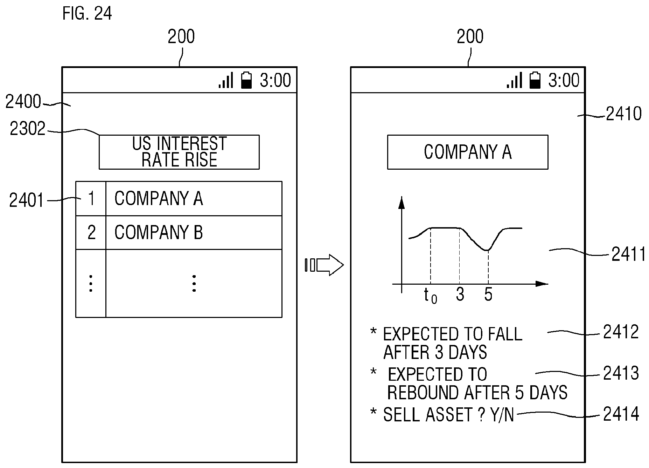

FIG. 24 illustrates an investment guidance interface based on a time when a keyword affects the price of an asset, which is referred to in some embodiments.

Referring to FIG. 24, when one 2302 of daily keywords is selected, the apparatus 100 may provide an interface 2400 to a user terminal 200. In FIG. 24, the interface 2400 includes stock price information 2401 of one or more companies corresponding to the keyword 2302 as asset information corresponding to the keyword 2302.

When company A is selected through the user terminal 200, the apparatus 100 may provide an interface 2410 to the user terminal 200. The interface 2410 may include information 2411 about the stock price of company A which has fluctuated in response to the keyword 2302. For example, the stock price information 2411 may be information about a change in the stock price of company A during a preset period of time.

In addition, the interface 2410 may include relevance information of the keyword 2302 to the stock of company A. For example, the interface 2410 may include information 2412 about how the stock price of company A is affected by the keyword 2302. The interface 2410 may also include information 2314 and 2413 about a time gap after which the keyword 2302 affects the stock price of company A. In addition, the interface 2410 may include information 2413 about a period of time during which the keyword 2302 affects the stock price of company A.

In addition to providing the above relevance information, the apparatus 100 may transmit a message 2414 for providing investment guidance on the stock of company A to the user terminal 200.

The message 2414 may include a recommendation for the purchase or sale of the stock of company A. In addition, the message 2414 may include guidance on the purchasing or selling timing of the stock of company A and the holding period of the stock of company A based on the time gap information and the information about a period of time during which the keyword 2302 affects the stock price of company A.

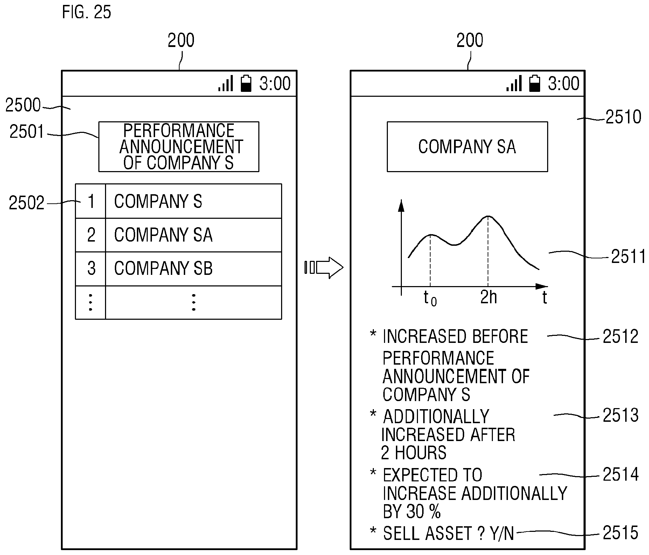

FIG. 25 illustrates an investment guidance interface based on the degree of influence of a keyword on the price of an asset, which is referred to in some embodiments.

When a user inputs a keyword 2501 to a user terminal 200, the apparatus 100 may receive the keyword 2501. The apparatus 100 may generate an interface 2500 in response to the keyword 2501 input by the user. The interface 2500 may include information about assets 2502 corresponding to the input keyword 2501.

The apparatus 100 may determine whether the input keyword 2501 matches any one of pre-stored daily keywords of the very date on which the keyword 2501 was input or any one of pre-stored daily keywords of another date. That is, when a keyword corresponding to a daily keyword is input, the apparatus 100 can identify asset information corresponding to the input keyword.

When any one of the assets 2502 is selected, the apparatus 100 may generate an interface 2510. In addition, the apparatus 100 may transmit the generated interface 2510 to the user terminal 200.

The interface 2510 may include information 2511 about the price of the selected asset which has fluctuated in response to the input keyword 2501 and relevance information. For example, the interface 2510 may include information 2512 about whether the influence of the keyword 2501 precedes or follows a change in the price of the asset. The interface 2510 may also include information 2513 about a time gap after which the keyword 2501 affects the price of the asset. In addition, the interface 2510 may include information about the influence of the keyword 2501 on the price of the asset, that is, information 2514 about the influence of the keyword 2501 on the price change of the asset.

In addition to providing the above relevance information, the apparatus 100 may transmit a message 2515 for providing investment guidance on the stock of company SA to the user terminal 200.

The message 2515 may include a recommendation about the purchase or sale of the asset. The apparatus 100 may also generate target profit information expected when the asset is invested based on the influence information. In this case, the message 2514 may include the target profit information.

The investment guidance service provided by the apparatus 100 when a keyword is selected or input by a user has been described above. According to an embodiment, the apparatus 100 may provide the user terminal 200 with keyword information for an asset that the user is holding or interested in. That is, the apparatus 100 may provide a keyword for an asset that the user is holding or interested in, thereby offering the user an opportunity to cope with a situation where the keyword is determined to be a daily keyword.

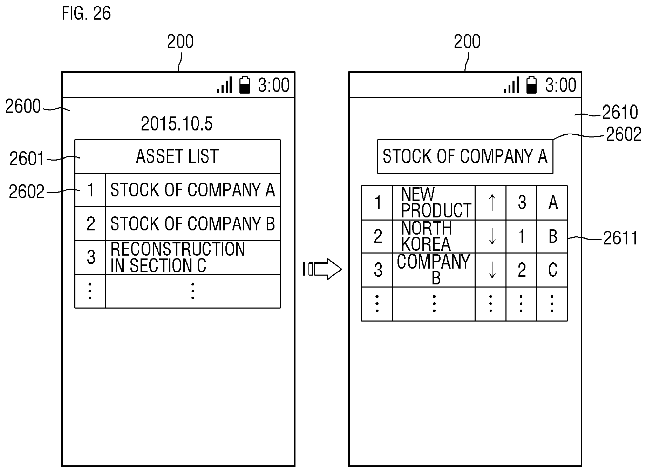

FIG. 26 illustrates a daily keyword corresponding to an asset according to an embodiment. Referring to FIG. 26, the apparatus 100 may receive information about the selection of an asset from a user terminal 200. To this end, the apparatus 100 may provide an interface 2600 to the user terminal 200. The interface 2600 may include an asset list 2601. The asset list 2601 may include one or more assets 2602. When any one of the assets 2602 is selected by a user, the apparatus 100 may receive information about user's selection and generate an interface 2610. In addition, the apparatus 100 may provide the interface 2610 to the user terminal 200. The interface 2610 may include information about the selected asset 2602 and a keyword list 2611 corresponding to the selected asset 2602.

The apparatus 100 may store the information about the asset 2602 selected by the user. In addition, the apparatus 100 may identify a keyword corresponding to the selected asset 2602 among one or more daily keywords of a first date. Then, the apparatus 100 may generate one or more daily keywords of a second date. Here, if the keyword corresponding to the selected asset 2602 is included in the daily keywords of the second date, the apparatus 100 may recognize this fact and transmit the keyword corresponding to the selected asset 2602 to the user terminal 200. Accordingly, the user may recognize that the price of the asset 2602 the user is holding or interested in can be changed. In addition, the apparatus 100 may determine that a change in the price of the asset 2502 selected by the user is likely based on the fact that the keyword corresponding to the selected asset 2602 is included in the daily keywords of the second date. Therefore, the apparatus 100 may transmit an investment guidance message to the user terminal 200 based on the determination result.

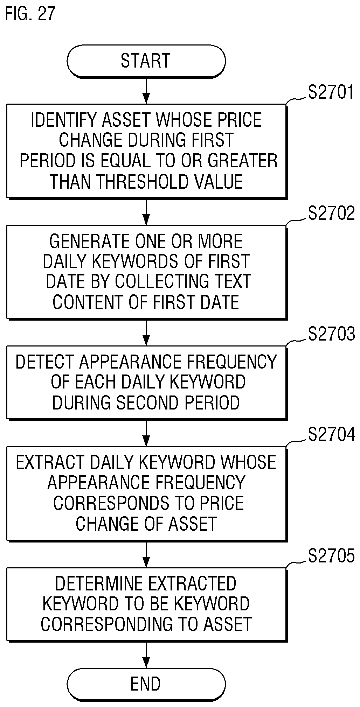

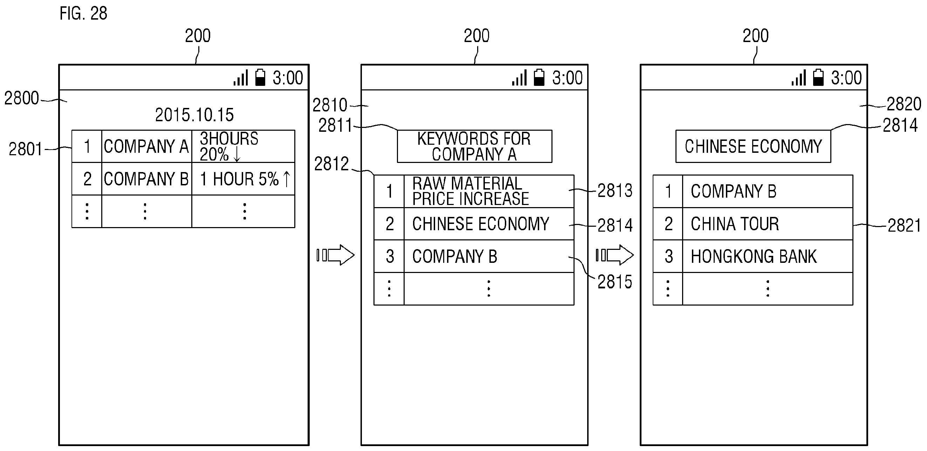

FIG. 27 is a flowchart illustrating a method of extracting a daily keyword corresponding to a price change of an asset according to an embodiment. FIG. 28 illustrates a service of, when the price of an asset is changed, recommending another asset according to an embodiment.

As described above, the influence of a keyword may not necessarily precede a change in the price of a corresponding asset. That is, a keyword corresponding to an asset can be determined to be a daily keyword after the price of the asset is changed. Hereinafter, a method of identifying a keyword corresponding to an asset after the price of the asset is changed will be described. In addition, a method of identifying another asset whose price is expected to change in response to the identified keyword will be described.

Referring to FIG. 27, the apparatus 100 may identify an asset whose daily price change during a first period is equal to or greater than a threshold value among pre-registered assets (operation S2701). In addition, the apparatus 100 may generate one or more daily keywords of a first date by collecting text content of the first date (operation S2702). Here, operation S2702 may not be performed after operation S2701. That is, the apparatus 100 may perform operation S2702 separately from operation S2701. In addition, the first date may be a current date. That is, the apparatus 100 may extract keywords from text content collected every day and generate one or more daily keywords of the first date based on the extracted keywords.

The apparatus 100 may detect daily appearance frequency of each daily keyword of the first date during a second period (operation S2703). The apparatus 100 may extract a keyword whose daily appearance frequency during the second period corresponds to the daily price change of the asset during the first period (operation S2704). The apparatus 100 may extract the keyword from the daily keywords of the first date.

The apparatus 100 may determine the extracted keyword to be a keyword corresponding to the asset (operation S2705).

Next, the apparatus 100 may detect a price change of the asset which is equal to or greater than the threshold value during a third period. In addition, the apparatus 100 may identify another asset corresponding to the extracted keyword among the pre-registered assets. Then, the apparatus 100 may transmit information about the identified asset to a user terminal 200. Therefore, when the price of a specific asset is changed, the apparatus 100 may predict a change in the price of another asset different from the specific asset based on the change in the price of the specific asset. In addition, the apparatus 100 may provide investment guidance to the user terminal 200 based on its prediction.

Referring to FIG. 28, the apparatus 100 may transmit an interface 2800 which displays information about price changes of pre-registered assets to a user terminal 200. Asset price change information 2801 may include information about price fluctuations of assets during a first period.

The apparatus 100 may identify a keyword corresponding to any one of the assets based on the price change of the asset included in the asset price change information 2801.

Referring to the asset price change information 2801 of FIG. 28, company A experienced a stock price change of 20 %, and company B experienced a stock price change of 5 %. For example, if a threshold value of the price change is 15 %, the apparatus 100 may identify a keyword whose appearance frequency corresponds to the stock of company A.

To identify the keyword, the apparatus 100 may store daily keyword information in advance. That is, the apparatus 100 may identify the keyword from the pre-stored daily keyword information. Then, the apparatus 100 may determine the identified keyword to be a keyword corresponding to the asset.

After identifying the keyword, the apparatus 100 may generate an interface 2810 and provide the interface 2810 to the user terminal 200. The interface 2810 may include an asset 2811 whose price change is equal to or greater than the threshold value and keyword information 2812 determined to correspond to the asset 2811. The keyword information 2812 may include one or more keywords 2813 through 2815. The apparatus 100 may prioritize the keywords 2813 through 2815 based on sources of the keywords 2813 through 2815, and the interface 2810 may include priority information of the keywords 2813 through 2815.

The apparatus 100 may identify an asset corresponding to any one of the keywords 2813 through 2815 included in the keyword information 2812. The identified asset may be different from the asset 2811 whose price change is equal to or greater than the threshold value. The apparatus 100 may generate an interface 2820 which includes any one 2814 of the keywords 2813 through 2815 and asset information 2821 corresponding to the keyword 2814. The apparatus 100 may transmit the interface 2820 to the user terminal 200.

Therefore, when the price change of a specific asset is equal to or greater than the threshold value, the apparatus 100 may provide the user terminal 200 with an investment guidance service on another asset whose price is expected to change.

### Method of displaying asset information matched with text content

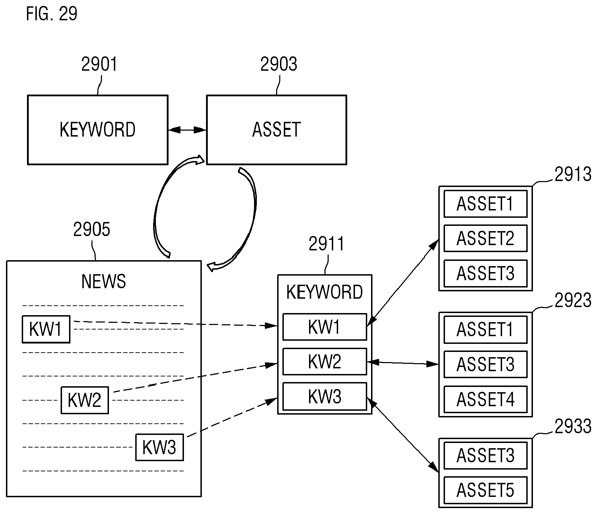

Embodiments of using relevance information of a keyword to a corresponding asset have been described above. The relevance of the keyword to the asset can be extended to text content which includes the keyword. This will now be described in detail with reference to FIG. 29.

FIG. 29 is a conceptual diagram illustrating the matching relationship between text content, keywords and assets according to an embodiment. In FIG. 29, Internet news is illustrated as an example of text content. It is assumed that keywords 2901 and corresponding assets 2903 are matched and stored accordingly according to the above-described embodiments.

A user terminal 200 may display Internet news 2905 on a display unit. The news 2905 may include one or more keywords. In FIG. 29, the news 2905 includes keyword 1 KW1, keyword 2 KW2 and keyword 3 KW3.

The user terminal 200 may detect keyword 1 KW1, keyword 2 KW2 and keyword 3 KW3 in the news 2905 and extract keyword 1 KW1, keyword 2 KW2 and keyword 3 KW3 as indicated by reference numeral 2911. After extracting keyword 1 KW1, keyword 2 KW2 and keyword 3 KW3, the user terminal 200 may extract assets 2913, 2923 and 2933 respectively matched with the extracted keyword 1 KW1, keyword 2 KW2 and keyword 3 KW3 from pre-registered assets.

In FIG. 29, of the pre-registered assets, asset 1, asset 2 and asset 3 are illustrated as the assets 2913 matched with keyword 1 KW1. In addition, asset 1, asset 3 and asset 4 are illustrated as the assets 2923 matched with keyword 2 KW2. The assets 2933 matched with keyword 3 KW3 are asset 3 and asset 5.

The user terminal 200 may identify the matched assets and extract the matched assets from the pre-registered assets. In addition, when there is an asset which has been extracted a preset number of times or more, the user terminal 200 may match the asset with the text content.

Referring again to FIG. 29, of the extracted assets, asset 3 has been extracted three times. For example, if the preset number of times is 3 times, asset 3 may be matched with the news 2905.

The user terminal 200 may display information about the asset which has been extracted the preset number of times or more in a second area different from a first area. That is, the information about asset 3 may be displayed in an area different from an area where the news 2905 is displayed.

Assets matched with one or more keywords may include an asset whose daily price change during a second period is equal to or greater than a threshold value in response to the daily appearance frequency of each of the keywords during a first period. That is, the matched assets may be assets matched with the keywords according to the above-described embodiments. In addition, information about the asset may include prediction information about the price of the asset which has been extracted the preset number of times or more, wherein the prediction information about the price of the asset is determined based on relevance information of at least one keyword to the asset which has been extracted the preset number of times or more. That is, the information about the asset may include the result of predicting price changes of the assets according to the above-described embodiments.

If pieces of text content are matched with assets as described above, a user can retrieve relevant text content based on an asset using the user terminal 200.

To this end, the user terminal 200 may display information about an asset in the first area of the display unit.

The information about the asset may be information about the prices, price changes, etc. of the asset provided on a web page at the request of the user.

The user terminal 200 may display a list of pieces of text content matched with the asset in the second area different from the first area. Here, each piece of the text content matched with the asset may include one or more keywords matched with the asset. For example, each piece of the text content may be an Internet news article including the keywords matched with the asset. In addition, the list of the pieces of the text content may be a list of Internet news articles.

When any one of the pieces of the text content on the displayed list is selected, the user terminal 200 may display the selected piece of the text content. In the above example, the user terminal 200 may display an Internet news article including the keywords.

The methods according to the embodiments described above with reference to the accompanying drawings may be performed by the execution of a computer program implemented as computer-readable code. The computer program may be transmitted from a first computing device to a second computing device through a network such as the Internet and then installed in the second computing device for use. Each of the first computing device and the second computing device may be a fixed computing device such as a server device or a desktop PC or a mobile computing device such as a notebook computer, a smartphone or a tablet PC.

According to the inventive concept, there is provided a method and apparatus for determining the influence of a keyword collected on the Internet on an asset.

According to the inventive concept, there is also provided a method and apparatus for predicting how much the price of an asset will be changed by the influence of a keyword collected on the Internet.

According to the inventive concept, there is also provided a method and apparatus for predicting a period of time during which a keyword collected on the Internet will affect the price of an asset.

According to the inventive concept, there is also provided a method and apparatus for predicting a time when a keyword collected on the Internet will affect the price of an asset.

According to the inventive concept, there is also provided a method and apparatus for providing investment guidance on an asset to a user by predicting various effects of a keyword collected on the Internet on the price of the asset.

In addition, according to the inventive concept, since a keyword that affects the price of an asset being held or targeted by a user is provided to the user, the user can secure the ability to respond to the keyword.

While the inventive concept has been particularly shown and described with reference to exemplary embodiments thereof, it will be understood by those of ordinary skill in the art that various changes in form and detail may be made therein without departing from the spirit and scope of the inventive concept as defined by the following claims. The exemplary embodiments should be considered in a descriptive sense only and not for purposes of limitation.

## Claims

1. A method of automatically generating a daily keyword using text content by a service server, the method comprising:
collecting text content posted on a first date through the Internet;
extracting a keyword from each piece of the text content and forming a keyword pool of the extracted keywords of the first date; and
generating one or more daily keywords of the first date using the result of comparing the keyword pool of the first date and a keyword pool of a second date.

2. The method of claim 1, wherein the generating of the daily keywords of the first date comprises:
determining a first time window based on the first date;
comparing the keyword pool of the first date with a keyword pool of at least one date included in the first time window; and
generating one or more daily keywords of the first date using the comparison result.

3. The method of claim 1, wherein the generating of the daily keywords of the first date comprises:
determining a first time window based on the first date;
determining whether a new keyword posted more than a predetermined number of times is included in the keywords of the keyword pool of the first date; and
generating one or more daily keywords including the new keyword when the new keyword is included in the keywords of the keyword pool of the first date,
wherein the new keyword is not included in a daily keyword pool of at least one other date within the first time window.

4. The method of claim 1, wherein the generating of the daily keywords of the first date comprises:
determining a first time window and a second time window based on the first date;
determining whether to remove each of the keywords included in the keyword pool of the first date based on a ratio of the number of times that each of the keywords was posted within the second time window and the number of times that each of the keywords was posted within the first time window; and
generating one or more daily keywords of the first date based on the determination result,
wherein the second time window comprises more dates than the first time window.

5. The method of claim 1, wherein the generating of the daily keywords of the first date comprises:
identifying sources of pieces of the collected text content which comprise the daily keywords of the first date; and
prioritizing the daily keywords of the first date based on the identified sources.

6. The method of claim 5, wherein when one of the daily keywords of the first date has different sources, the generating of the daily keywords of the first date comprises determining the keyword to be different keywords according to attributes of each of the different sources.

7. A method of evaluating the relevance of a keyword to an asset price by a service server, the method comprising:
collecting text content posted on a first date through the Internet;
generating one or more daily keywords of the first date by extracting a keyword from each piece of the text content;
generating daily appearance frequency information of each daily keyword of the first date; and
determining an asset corresponding to each daily keyword by comparing the generated daily appearance frequency information of each daily keyword with daily price information of each pre-registered asset.

8. The method of claim 7, wherein the determining of the asset corresponding to each daily keyword comprises:
identifying an asset whose daily price change during a second period is equal to or greater than a threshold value in response to the daily appearance frequency of each daily keyword during a first period; and
determining the identified asset to be an asset corresponding to each daily keyword.

9. An apparatus for evaluating the relevance of a keyword to an asset price, the apparatus comprising:
one or more processors;
a memory which loads a computer program executed by the processors;
a storage unit which stores daily price information of each pre-registered asset and daily keywords generated by the execution of the computer program; and
a network interface which transmits the daily keywords,
wherein the computer program comprises:
an operation of collecting text content posted on a first date through the Internet;
an operation of generating one or more daily keywords of the first date by extracting a keyword from each piece of the text content;
an operation of generating daily appearance frequency information of each daily keyword of the first date; and
an operation of determining an asset corresponding to each daily keyword by comparing the generated daily appearance frequency information of each daily keyword with the daily price information of each pre-registered asset.

10. The apparatus of claim 9, wherein the operation of determining the asset corresponding to each daily keyword comprises:
an operation of identifying an asset whose daily price change during a second period is equal to or greater than a threshold value in response to the daily appearance frequency of each daily keyword during a first period; and
an operation of determining the identified asset to be an asset corresponding to each daily keyword.

11. The apparatus of claim 10, wherein the computer program further comprises:
an operation of generating one or more daily keywords of a second date; and
an operation of determining whether the same keyword as any one of the daily keywords of the first date is included in the daily keywords of the second date.

12. The apparatus of claim 11, wherein the operation of determining the asset corresponding to each daily keyword comprises an operation of storing a daily price change which is equal to or greater than the threshold value as relevance information of each daily keyword to the corresponding asset, wherein the computer program further comprises an operation of transmitting investment guidance on the corresponding asset to a user terminal based on the relevance information when it is determined that the same keyword as the any one of the daily keywords of the first date is included in the daily keywords of the second date.

13. The apparatus of claim 10, wherein the computer program further comprises an operation of, when receiving information about a selected daily keyword from a user terminal, transmitting information about an asset corresponding to the selected daily keyword to the user terminal.

14. An apparatus for evaluating the relevance of a keyword to an asset price, the apparatus comprising:
one or more processors;
a memory which loads a computer program executed by the processors; and
a storage unit which stores daily price information of each pre-registered asset and daily keywords generated by the execution of the computer program,
wherein the computer program comprises:
an operation of identifying an asset whose daily price change during a first period is equal to or greater than a threshold value among the pre-registered assets;
an operation of collecting text content posted on a first date through the Internet;
an operation of generating one or more daily keywords of the first date by extracting a keyword from each piece of the text content;
an operation of detecting daily appearance frequency of each daily keyword of the first date during a second period;
an operation of extracting a keyword whose daily appearance frequency during the second period corresponds to the daily price change of the identified asset during the first period from the daily keywords of the first date; and
an operation of determining the extracted keyword to be a keyword corresponding to the identified asset.

15. The apparatus of claim 14, further comprising a network interface which transmits the determined keyword, wherein the computer program comprises an operation of detecting a price change of the identified asset which is equal to or greater than the threshold value during a third period, an operation of identifying an asset corresponding to the determined keyword among the pre-registered assets, and an operation of transmitting investment guidance on the identified asset to a user terminal.
